# EUROPEAN PATENT APPLICATION

(11) **EP 4 270 524 A1**
(43) Date of publication of application: **01.11.2023**
(21) Application number: 21914981.2
(22) Date of filing: 26.10.2021
(51) Int. Cl.: H01M 4/13, H01M 6/18, H01M 10/0562, H01M 10/0585, H01M 50/543

(54) **BATTERY, LAYERED BATTERY, AND METHOD FOR MANUFACTURING SAME**

(30) Priority: 28.12.2020 JP 2020218966; 06.10.2021 JP 2021164497
(71) Applicant: Panasonic Intellectual Property Management Co., Ltd., Kadoma-shi, Osaka 571-0057 (JP)
(72) Inventor: MORIOKA, Kazuhiro, Kadoma-shi, Osaka 571-0057 (JP); KAWASE, Akira, Kadoma-shi, Osaka 571-0057 (JP)
(74) Representative: Grünecker Patent- und Rechtsanwälte PartG mbB
(86) International application number: PCT/JP2021/039385
(87) International publication number: WO 2022/145120

(57) **Abstract**

A battery includes an electrode layer, a counter-electrode layer placed opposite to the electrode layer, and a solid electrolyte layer located between the electrode layer and the counter-electrode layer. The electrode layer includes an electrode collector, an electrode active material layer located between the electrode collector and the solid electrolyte layer, and an electrode-side insulating layer located between the electrode collector and the electrode active material layer at ends of the electrode layer. The counter-electrode layer includes a counter-electrode collector, a counter-electrode active material layer located between the counter-electrode collector and the solid electrolyte layer, and a counter-electrode-side insulating layer located between the counter-electrode collector and the counter-electrode active material layer at ends of the counter-electrode layer. In a plan view, a length of the electrode-side insulating layer in a direction from an outer periphery toward a central part of the battery is greater than a length of the counter-electrode-side insulating layer in the direction from the outer periphery toward the central part of the battery.

## Description

### Technical Field

The present disclosure relates to a battery, a laminated battery, and a method for manufacturing the same.

### Background Art

PTLs 1 and 2 each disclose a battery including an insulating member.

### Citation List

### Patent Literature

PTL 1: International Publication No. 2012/164642
PTL 2: Japanese Unexamined Patent Application Publication No. 2016-207286

### Summary of Invention

### Technical Problem

The conventional technology is required to improve the reliability of a battery. To address this problem, the present disclosure has as an object to provide, for example, a highly-reliable battery.

### Solution to Problem

A battery according to an aspect of the present disclosure includes an electrode layer, a counter-electrode layer placed opposite to the electrode layer, and a solid electrolyte layer located between the electrode layer and the counter-electrode layer. The electrode layer includes an electrode collector, an electrode active material layer located between the electrode collector and the solid electrolyte layer, and an electrode-side insulating layer located between the electrode collector and the electrode active material layer at ends of the electrode layer. The counter-electrode layer includes a counter-electrode collector, a counter-electrode active material layer located between the counter-electrode collector and the solid electrolyte layer, and a counter-electrode-side insulating layer located between the counter-electrode collector and the counter-electrode active material layer at ends of the counter-electrode layer. In a plan view, a length of the electrode-side insulating layer in a direction from an outer periphery toward a central part of the battery is greater than a length of the counter-electrode-side insulating layer in the direction from the outer periphery toward the central part of the battery.

A laminated battery according to an aspect of the present disclosure includes a plurality of the batteries. The plurality of batteries are laminated.

A method for manufacturing a battery according to an aspect of the present disclosure includes an insulating layer laminating step of laminating a first insulating layer on a portion of at least one surface of a first collector, a power-generating element laminating step of laminating a power-generating element obtained by laminating an electrode active material layer, a solid electrolyte layer, and a counter-electrode active material layer in this order and a laminated combination of the first collector and the first insulating layer such that the electrode active material layer covers the first insulating layer, a collector laminating step of laminating a second insulating layer and a second collector on a side of the power-generating element that faces away from the first collector, the second insulating layer and the second collector being laminated on the power-generating element such that the second insulating layer is sandwiched between the counter-electrode active material layer of the power-generating element and the second collector and the first insulating layer and the second insulating layer are positioned to overlap each other in plan view, and a cutting step of cutting a laminated combination of the first collector and the first insulating layer, the power-generating element, the second insulating layer, and the second collector at a position where the first insulating layer and the second insulating layer are divided.

### Advantageous Effects of Invention

The present disclosure makes it possible to provide, for example, a highly-reliable battery.

### Brief Description of Drawings

[Fig. 1] Fig. 1 is a schematic top view showing an example of a battery according to Embodiment 1.
[Fig. 2] Fig. 2 is a cross-sectional view taken along line II-II in Fig. 1.
[Fig. 3] Fig. 3 is a schematic cross-sectional view showing an example of a battery according to a comparative example.
[Fig. 4] Fig. 4 is a schematic cross-sectional view showing another example of a battery according to the comparative example.
[Fig. 5] Fig. 5 is a flow chart for explaining a method for manufacturing a battery according to Embodiment 1.
[Fig. 6A] Fig. 6A is a schematic view showing an example of a laminated combination of a collector and an insulating layer according to Embodiment 1.
[Fig. 6B] Fig. 6B is a schematic view showing another example of a laminated combination of a collector and an insulating layer according to Embodiment 1.
[Fig. 6C] Fig. 6C is a schematic view showing another example of a laminated combination of a collector and an insulating layer according to Embodiment 1.
[Fig. 7A] Fig. 7A is a schematic cross-sectional view showing an example of a laminated polar plate according to Embodiment 1.
[Fig. 7B] Fig. 7B is a schematic cross-sectional view showing another example of a laminated polar plate according to Embodiment 1.
[Fig. 7C] Fig. 7C is a schematic cross-sectional view showing another example of a laminated polar plate according to Embodiment 1.
[Fig. 8] Fig. 8 is a diagram for explaining a collector laminating step and a cutting step of the method for manufacturing a battery according to Embodiment 1.
[Fig. 9] Fig. 9 is a schematic cross-sectional view showing an example of a battery according to Modification 1 of Embodiment 1.
[Fig. 10] Fig. 10 is a diagram for explaining a cutting step of a method for manufacturing a battery according to Modification 1 of Embodiment 1.
[Fig. 11] Fig. 11 is a schematic top view showing an example of a battery according to Modification 2 of Embodiment 1.
[Fig. 12] Fig. 12 is a schematic side view showing an example of a battery according to Modification 2 of Embodiment 1.
[Fig. 13] Fig. 13 is a schematic cross-sectional view showing an example of a battery according to Modification 3 of Embodiment 1.
[Fig. 14] Fig. 14 is a schematic cross-sectional view showing an example of a laminated battery according to Embodiment 2.
[Fig. 15] Fig. 15 is a schematic cross-sectional view showing another example of a laminated battery according to Embodiment 2.
[Fig. 16] Fig. 16 is a flow chart for explaining a method for manufacturing a laminated battery according to Embodiment 2.
[Fig. 17] Fig. 17 is a schematic cross-sectional view showing an example of a laminated polar plate according to Embodiment 2.
[Fig. 18] Fig. 18 is a diagram for explaining a first laminated body laminating step and subsequent steps of a method for manufacturing a laminated battery according to Embodiment 2.
[Fig. 19] Fig. 19 is a schematic cross-sectional view showing an example of a laminated polar plate according to Modification 1 of Embodiment 2.
[Fig. 20] Fig. 20 is a schematic cross-sectional view showing another example of a laminated polar plate according to Modification 1 of Embodiment 2.
[Fig. 21] Fig. 21 is a schematic cross-sectional view showing an example of a multi-layer polar plate according to Modification 1 of Embodiment 2.
[Fig. 22] Fig. 22 is a schematic cross-sectional view showing an example of a laminated battery according to Modification 1 of Embodiment 2.
[Fig. 23] Fig. 23 is a schematic cross-sectional view showing an example of a laminated battery according to Embodiment 3.
[Fig. 24] Fig. 24 is a schematic cross-sectional view showing another example of a laminated battery according to Embodiment 3.
[Fig. 25] Fig. 25 is a schematic cross-sectional view showing still another example of a laminated battery according to Embodiment 3.

### Description of Embodiments

### (Underlying Knowledge Forming Basis of the Present Disclosure)

In a battery such as an all-solid-state battery including a solid electrolyte layer containing a solid electrolyte, a terminal may be formed at an end of the battery so that an electrical current is taken out. In particular, in a case where batteries are laminated for use, forming terminals on side surfaces of the batteries makes it unnecessary to form, in a thickness direction in which the capacity of the batteries is greatly affected, terminals that do not contribute to the capacity of the batteries, thus making it possible to increase the energy density of the batteries. Meanwhile, in a case where a terminal through to make an electrical connection with a collector is formed on a side surface of a battery, the effect of, for example, the surface energy of the collector may make it difficult to form the terminal. Further, the collector has such a small thickness that it may be hard to recognize where to form the terminal, and the terminal may be formed with a misalignment. In this way, the defective formation of the terminal may result in reduced reliability of the battery.

Further, in the battery, the collector easily delaminates at ends, and delamination of the collector for example causes an active material layer to be exposed so that it becomes easy for an active material to drop off, resulting in reduced reliability of the battery.

To address this problem, the present disclosure provides a highly-reliable battery. In particular, the present disclosure provides a highly-reliable battery whose energy density can be increased.

The following gives a brief description of an aspect of the present disclosure.

A battery according to an aspect of the present disclosure includes an electrode layer, a counter-electrode layer placed opposite to the electrode layer, and a solid electrolyte layer located between the electrode layer and the counter-electrode layer. The electrode layer includes an electrode collector, an electrode active material layer located between the electrode collector and the solid electrolyte layer, and an electrode-side insulating layer located between the electrode collector and the electrode active material layer at ends of the electrode layer. The counter-electrode layer includes a counter-electrode collector, a counter-electrode active material layer located between the counter-electrode collector and the solid electrolyte layer, and a counter-electrode-side insulating layer located between the counter-electrode collector and the counter-electrode active material layer at ends of the counter-electrode layer. In a plan view, a length of the electrode-side insulating layer in a direction from an outer periphery toward a central part of the battery is greater than a length of the counter-electrode-side insulating layer in the direction from the outer periphery toward the central part of the battery.

As a result of this, a region in which the electrode collector, the electrode-side insulating layer, and the electrode active material layer are laminated in this order is present at the ends of the electrode layer, and a region in which the counter-electrode collector, the counter-electrode-side insulating layer, and the counter-electrode active material layer are laminated in this order is present at the ends of the counter-electrode layer. Therefore, even if the electrode collector and the counter-electrode collector delaminate at the ends of the electrode collector and the counter-electrode collector, at which delamination tends to occur, exposure of the electrode active material layer and the counter-electrode active material layer is reduced. This makes it hard for damage, a short circuit, or other failures to occur due to contact between the electrode active material layer and another member or between the counter-electrode active material layer and another member. Further, the electrode active material layer can be easily protected even in a case where the electrode collector is more likely to delaminate than the counter-electrode collector, as the length of the electrode-side insulating layer is great. Further, even in a case where terminals through which to take out an electrical current are formed on side surfaces of the electrode collector and the counter-electrode collector, the electrode-side insulating layer and the counter-electrode-side insulating layer serve as marks to make it easy to recognize where to form the terminals. Further, even in a case where the terminals are formed from a material such as conductive resin, the electrode-side insulating layer and the counter-electrode-side insulating layer bring about improvement in wettability of the material, making it possible to easily form the terminal. This reduces the occurrence of a short circuit, a faulty connection, or other failures due to defective formation of the terminals. This makes it possible to enhance the reliability of the battery.

Further, for example, a side surface of the electrode-side insulating layer and a side surface of the electrode collector may be flush with each other, and a side surface of the counter-electrode-side insulating layer and a side surface of the counter-electrode collector may be flush with each other.

This makes it possible to manufacture the battery with the areas of the electrode-side insulating layer and the counter-electrode-side insulating layer easily adjusted, for example, by cutting the electrode-side insulating layer and the electrode collector all at once and cutting he counter-electrode-side insulating layer and the counter-electrode collector all at once, as the side surface of the electrode-side insulating layer and the side surface of the electrode collector are flush with each other, and the side surface of the counter-electrode-side insulating layer and the side surface of the counter-electrode collector are flush with each other. Therefore, although the presence of the electrode-side insulating layer and the counter-electrode-side insulating layer inhibits the electrode active material layer and the electrode collector from giving and receiving ions to and from each other and the counter-electrode active material layer and the counter-electrode collector from giving and receiving ions to and from each other and results in the formation of regions in which the electrode active material layer and the counter-electrode active material layer hardly function as electrodes, these regions can be minimized by adjusting the areas of the electrode-side insulating layer and the counter-electrode-side insulating layer. This makes it possible to increase the volume energy density of the battery. Furthermore, since the side surfaces are flush with each other, the terminals through which to take out an electrical current can be easily formed. Further, a region that does not function as a battery more hardly increases than in a case where the electrode collector and the counter-electrode collector are extended for use as terminals, so that the volume energy density of the battery can be increased.

Further, for example, a thickness of the electrode-side insulating layer may be greater than or equal to half of a thickness of the electrode collector, and a thickness of the counter-electrode-side insulating layer may be greater than or equal to half of a thickness of the counter-electrode collector.

This makes it easier to, even in a case where the terminals are formed as mentioned above, recognize where to form the terminals. Further, even in a case where the terminals are formed from a material such as conductive resin, the electrode-side insulating layer and the counter-electrode-side insulating layer bring about further improvement in wettability of the material, as the electrode-side insulating layer and the counter-electrode-side insulating layer are thick.

Further, for example, the electrode layer may be a positive-electrode layer, and the counter-electrode layer may be a negative-electrode layer.

As a result of this, a region in which the electrode active material layer and the electrode-side insulating layer overlap each other in plan view and that hardly functions as a positive electrode becomes larger than a region in which the counter-electrode active material layer and the counter-electrode-side insulating layer overlap each other in plan view and that hardly functions as a negative electrode. Therefore, the capacitance of the negative-electrode active material layer tends to be larger than the capacitance of the positive-electrode active material layer. This suppresses deposition of metal derived from metal ions not incorporated into the negative-electrode active material layer, making it possible to further enhance the reliability of the battery.

Further, for example, the length of the electrode-side insulating layer in the direction from the outer periphery to the central part of the battery may be equal to the length of the counter-electrode-side insulating layer in the direction from the outer periphery to the central part of the battery.

This makes it possible to easily manufacture the battery, as the lengths of the electrode-side insulating layer and the counter-electrode-side insulating layer are equal.

Further, for example, at least one of the electrode-side insulating layer or the counter-electrode-side insulating layer may contain resin.

This enhances the bondability between at least one of the electrode-side insulating layer and the counter-electrode-side insulating layer and the collector and between at least one of the electrode-side insulating layer and the counter-electrode-side insulating layer and the electrode active material layer through an anchor effect by which the resin contained in at least one of the electrode-side insulating layer and the counter-electrode-side insulating layer penetrates into the collector and the electrode active material layer, making it possible to reduce delamination between at least one of the electrode-side insulating layer and the counter-electrode-side insulating layer and the collector and between at least one of the electrode-side insulating layer and the counter-electrode-side insulating layer and the electrode active material layer.

Further, for example, at least one of the electrode-side insulating layer or the counter-electrode-side insulating layer may contain a metal oxide.

This causes at least one of the electrode-side insulating layer and the counter-electrode-side insulating layer to be hard. Therefore, even in a case where at least one of the insulating layers is thinly formed at the time of manufacture of the battery, at least one of the insulating layers hardly deforms in being laminated on another layer. At least one of the insulating layers thus formed can be a thin layer of uniform thickness.

Further, for example, the electrode-side insulating layer and the counter-electrode-side insulating layer may be made of the same material.

This makes it possible to easily manufacture the battery without the need to use different materials for the electrode-side insulating layer and the counter-electrode-side insulating layer.

Further, for example, the length of each of the electrode-side insulating layer and the counter-electrode-side insulating layer in the direction from the outer periphery toward the central part of the battery in plan view may be smaller than or equal to 1 mm.

As a result of this, a region in which the presence of the electrode-side insulating layer and the counter-electrode-side insulating layer makes it hard for the electrode active material layer and the counter-electrode active material layer to function as electrodes can fall within a range smaller than or equal to a certain length. This makes it possible to increase the volume energy density of the battery.

Further, for example, a thickness of at least one of the electrode-side insulating layer and the counter-electrode-side insulating layer may be greater than or equal to 5 µm.

This causes at least one of the electrode-side insulating layer and the counter-electrode-side insulating layer to be thick. Therefore, even in a case where the terminals through which to take out an electrical current are formed on side surfaces of the electrode collector and the counter-electrode collector, the effect of making it easy to recognize where to form the terminals and the effect of making it possible to easily form the terminals can be enhanced.

Further, for example, respective side surfaces of the solid electrolyte layer, the electrode collector, the electrode active material layer, the electrode-side insulating layer, the counter-electrode collector, the counter-electrode active material layer, and the counter-electrode-side insulating layer may be exposed.

In this way, layers that contribute to the charge-discharge performance of the battery are present to ends of the battery. This makes it possible to increase the volume energy density of the battery.

Further, for example, a side surface of the electrode layer, a side surface of the counter-electrode layer, and a side surface of the solid electrolyte layer may be flush with one another.

This makes the side surfaces of the layers of the battery free from steps or asperities. This prevents a space that does not contribute to the charge-discharge performance of the battery from being formed by the presence of asperities, making it possible to reduce substantive deterioration of the energy density of the battery. This makes it possible to increase the volume energy density of the battery.

Further, for example, the electrode active material layer and the counter-electrode active material layer may have the same shape and position in plan view.

This makes it possible to reduce the difference in capacitance between the counter-electrode active material layer and the electrode active material layer, thus making it possible to maximize the capacitance of the counter-electrode active material layer or the electrode active material layer.

Further, for example, a side surface of the battery may be inclined in such a direction with respect to a laminating direction that an area of the counter-electrode layer is larger than an area of the electrode layer in plan view.

This causes the side surface of the solid electrolyte layer to be larger than in a case where the side surface is not inclined, as the side surface of the solid electrolyte layer too is inclined with respect to the laminating direction on the side surface of the battery. This results in an increase in the distance between the electrode layer and the counter-electrode layer, which are separated from each other by the solid electrolyte layer, on the side surface of the battery. This makes it hard for the electrode layer and the counter-electrode layer to make contact with each other, reducing the risk of a short circuit.

Further, for example, a side surface of the battery may be a cut surface.

In this way, since the side surface, which is to become an end of the battery, is formed by cutting, adjusting the areas of the electrode-side insulating layer and the counter-electrode-side insulating layer according to cutting position makes it possible to reduce the areas of regions in which the presence of the electrode-side insulating layer and the counter-electrode-side insulating layer makes it hard for the electrode active material layer and the counter-electrode active material layer to function as electrodes, making it possible to improve the volume energy density of the battery. Further, since the side surface of the battery is a cut surface, the side surface of the electrode layer, the side surface of the counter-electrode layer, and the side surface of the solid electrolyte layer can be easily made flush with one another.

Further, for example, a shape of the cut surface may be a rectangle or a trapezoid.

This causes the cut surface to have linearly-shaped ends. This prevents a space that does not contribute to the charge-discharge performance of the battery from being formed by non-linear ends, making it possible to reduce substantive deterioration of the energy density of the battery. This makes it possible to increase the energy density of the battery.

Further, for example, the electrode-side insulating layer may be in a shape of a frame provided on an outer periphery of the electrode layer in plan view, and the counter-electrode-side insulating layer may be in a shape of a frame provided on an outer periphery of the counter-electrode layer in plan view.

This brings about an effect of providing the electrode-side insulating layer and the counter-electrode-side insulating layer in any places on the respective outer peripheries of the electrode layer and the counter-electrode layer.

Further, for example, a planimetric shape of the battery may be a rectangle, and the electrode-side insulating layer and the counter-electrode-side insulating layer may each be disposed along two opposite sides of the rectangle.

Thus, such formation of the electrode-side insulating layer and the counter-electrode-side insulating layer in striped shapes extending in one direction makes it only necessary to move a coating nozzle or the electrode collector and the counter-electrode collector or other members only in one direction in forming the electrode-side insulating layer and the counter-electrode-side insulating layer by coating or other processes, making it possible to efficiently manufacture the battery.

Further, for example, the solid electrolyte layer may contain a solid electrolyte having lithium-ion conductivity.

This makes it possible to enhance the battery reliability of a lithium-ion battery containing a solid electrolyte.

Further, a laminated battery according to an aspect of the present disclosure includes a plurality of the batteries. The plurality of batteries are laminated.

This makes it possible to achieve a highly-reliable laminated battery, as the batteries are laminated.

Further, for example, the plurality of batteries may be laminated such that the electrode layers or the counter-electrode layers of adjacent ones of the plurality of batteries are adjacent to each other, and the laminated battery may include an electrode terminal that is in contact with respective side surfaces of the electrode collectors and the electrode-side insulating layers in the electrode layers and a counter-electrode terminal that is in contact with respective side surfaces of the counter-electrode collectors and the counter-electrode-side insulating layers in the counter-electrode layers.

As a result of this, in a laminated battery laminated so that parallel connections can be made, the electrode terminal through which to take out an electrical current from the electrode layers and the counter-electrode terminal through which to take out an electrical current from the counter-electrode layers are provided in contact with the respective side surfaces of the electrode collectors and the counter-electrode collectors, respectively. Therefore, there is no need to form so-called margins of the electrode collectors and the counter-electrode collectors through which to connect to connection terminals such as leads. This makes it possible to further increase the volume energy density of the laminated battery.

Further, the electrode collectors and the counter-electrode collectors, which are constituted by metal foil or other materials, are high in surface energy and tend to repel a material of the electrode terminal and the counter-electrode terminal. Since the electrode-side insulating layers and the counter-electrode-side insulating layers contain resin or other materials, the material of the electrode terminal and the counter-electrode terminal is higher in wettability than the electrode collectors and the counter-electrode collectors. Further, it is hard for the material of the electrode terminal and the counter-electrode terminal to soak into the electrode-side insulating layers and the counter-electrode-side insulating layers than into the electrode active material layers and the counter-electrode active material layers, which are formed from a mixture of active materials. This makes it easy to form the electrode terminal and the counter-electrode terminal in regions including side surfaces of the electrode-side insulating layers and the counter-electrode-side insulating layers. Further, reducing the thicknesses of the electrode collectors and the counter-electrode collectors to increase the volume energy density of the laminated battery makes it hard to recognize the locations of the side surfaces of the electrode collectors and the counter-electrode collectors. However, the presence of the electrode-side insulating layers laminated on the electrode collectors and the counter-electrode-side insulating layers laminated on the counter-electrode collectors makes it easy to recognize the locations of the side surfaces of the electrode collectors and the counter-electrode collectors. This makes it possible to reduce the occurrence of a short circuit or other failures due to formation of the electrode terminal and the counter-electrode terminal with misalignments. Thus, in a case where the electrode terminal and the counter-electrode terminal are formed on the laminated battery, the occurrence of defective formation of the electrode terminal and the counter-electrode terminal can be reduced, so that a highly-reliable laminated battery can be formed.

Further, a method for manufacturing a battery according to an aspect of the present disclosure includes an insulating layer laminating step of laminating a first insulating layer on a portion of at least one surface of a first collector, a power-generating element laminating step of laminating a power-generating element obtained by laminating an electrode active material layer, a solid electrolyte layer, and a counter-electrode active material layer in this order and a laminated combination of the first collector and the first insulating layer such that the electrode active material layer covers the first insulating layer, a collector laminating step of laminating a second insulating layer and a second collector on a side of the power-generating element that faces away from the first collector, the second insulating layer and the second collector being laminated on the power-generating element such that the second insulating layer is sandwiched between the counter-electrode active material layer of the power-generating element and the second collector and the first insulating layer and the second insulating layer are positioned to overlap each other in plan view, and a cutting step of cutting a laminated combination of the first collector and the first insulating layer, the power-generating element, the second insulating layer, and the second collector at a position where the first insulating layer and the second insulating layer are divided.

In this way, the first collector, the first insulating layer, and the electrode active material layer are laminated in this order at the ends of the first collector of the battery thus manufactured. Further, the second collector, the second insulating layer, and the counter-electrode active material layer are laminated in this order at the ends of the second collector. Therefore, even if the first collector and the second collector delaminate at the ends of the first collector and the second collector, at which delamination tends to occur, exposure of the electrode active material layer and the counter-electrode active material layer is reduced, as the first insulating layer and the second insulating layer are exposed. This results in making it hard for damage, a short circuit, or other failures to occur due to contact between the electrode active material layer and another member or between the counter-electrode active material layer and another member. This makes it possible to manufacture a highly-reliable battery.

The following describes embodiments in concrete terms with reference to the drawings.

It should be noted that the embodiments to be described below each illustrate a comprehensive and specific example. The numerical values, shapes, materials, constituent elements, placement and topology of constituent elements, or other features that are shown in the following embodiments are just a few examples and are not intended to limit the present disclosure.

Further, terms such as "parallel" and "flush" used herein to show the way in which elements are interrelated, terms such as "flat" and "rectangular" used herein to show the shape of an element, and ranges of numerical values used herein are not expressions that represent only exact meanings but expressions that are meant to also encompass substantially equivalent ranges, e.g. differences of approximately several percent.

Further, the drawings are not necessarily strict illustrations. In the drawings, substantially the same components are given the same reference signs, and a repeated description may be omitted or simplified.

Further, in the present specification and drawings, the x axis, the y axis, and the z axis represent the three axes of a three-dimensional orthogonal coordinate system. In each of the embodiments, the z-axis direction is a laminating direction of a battery. Further, a positive direction parallel with the z axis is upward in the z-axis direction, and a negative direction parallel with the z axis is downward in the z-axis direction. Further, the term "plan view" used herein means a case where the battery is seen from an angle parallel with the z axis. Further, the term "thickness" used herein means the length of each layer in the laminating direction. That is, each layer is laminated in a direction parallel with the thickness of the layer.

Further, the terms "above" and "below" in the configuration of a battery used herein do not refer to an upward direction (upward in a vertical direction) and a downward direction (downward in a vertical direction) in absolute space recognition, but are used as terms that are defined by a relative positional relationship on the basis of an order of laminating in a laminating configuration. Further, the terms "above" and "below" are applied not only in a case where two constituent elements are placed at a spacing from each other with another constituent element present between the two constituent elements, but also in a case where two constituent elements touch each other by being placed in close contact with each other.

### (Embodiment 1)

The following describes a battery according to Embodiment 1. The battery according to Embodiment 1 is a single cell including one electrode active material layer and one counter-electrode active material layer.

### [Configuration]

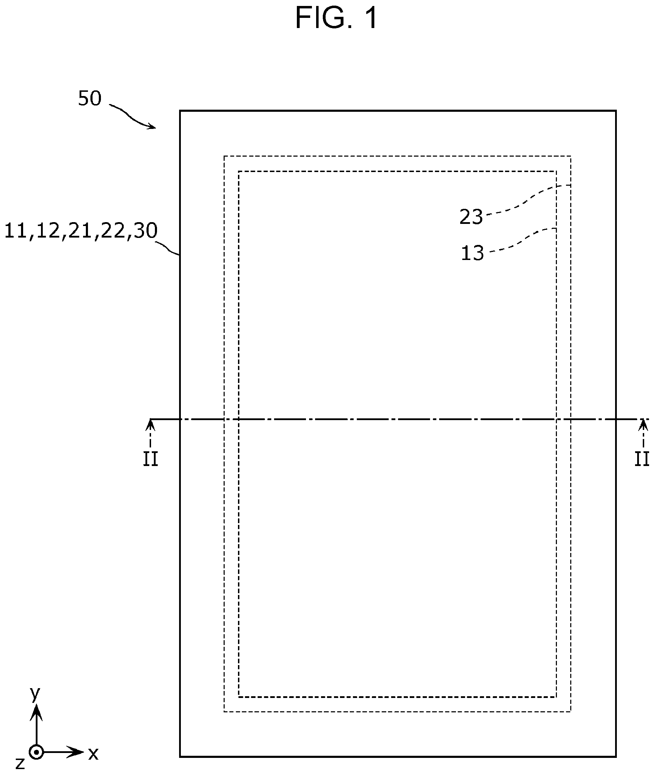

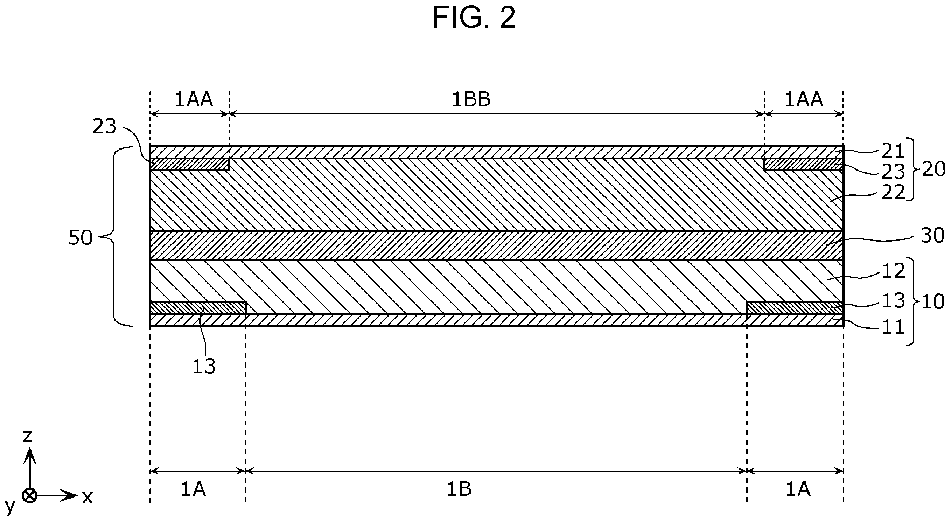

First, a configuration of the battery according to Embodiment 1 is described with reference to the drawings. Fig. 1 is a schematic top view showing an example of a battery according to the present embodiment. In Fig. 1, the planimetric shapes of constituent elements of the battery are indicated by solid lines and dashed lines. Fig. 2 is a cross-sectional view as taken along line II-II in Fig. 1.

As shown in Figs. 1 and 2, the battery 50 according to the present embodiment includes an electrode layer 10, a counter-electrode layer 20 placed opposite to the electrode layer 10, and a solid electrolyte layer 30 located between the electrode layer 10 and the counter-electrode layer 20. That is, the battery 50 has a structure in which the electrode layer 10, the solid electrolyte layer 30, and the counter-electrode layer 20 are laminated in this order.

The electrode layer 10 includes a collector 11, an electrode active material layer 12 located between the collector 11 and the solid electrolyte layer 30, and an insulating layer 13 located between the collector 11 and the electrode active material layer 12 at ends of the electrode layer 10 in plan view. The collector 11 and the electrode active material layer 12 have the same shape and position in plan view. The collector 11 is an example of an electrode collector, and the insulating layer 13 is an example of an electrode-side insulating layer.

The counter-electrode layer 20 includes a collector 21, a counter-electrode active material layer 22 located between the collector 21 and the solid electrolyte layer 30, and an insulating layer 23 located between the collector 21 and the counter-electrode active material layer 22 at ends of the counter-electrode layer 20 in plan view. The collector 21 and the counter-electrode active material layer 22 have the same shape and position in plan view. The collector 21 is an example of a counter-electrode collector, and the insulating layer 23 is an example of a counter-electrode-side insulating layer.

The battery 50 is for example an all-solid-state battery. A side surface of the battery 50 is parallel with the laminating direction. Further, the side surface of the battery 50 is a flat surface. In other words, a side surface of the electrode layer 10, a side surface of the counter-electrode layer 20, and a side surface of the solid electrolyte layer 30 are in a stepless state, and are located at the same flat surface. That is, the side surface of the electrode layer 10, the side surface of the counter-electrode layer 20, and the side surface of the solid electrolyte layer 30 are flush with one another. It should be noted that the term "side surface" refers to a surface of each constituent element of the battery 50 that extends from an end of a principal surface in a direction intersecting the principal surface, with the principal surface being a flat surface that is perpendicular to the laminating direction. The planimetric shape of the battery 50 is a rectangle. Therefore, the planimetric shapes of the electrode layer 10, the counter-electrode layer 20, and the solid electrolyte layer 30 are rectangles.

Further, at an end of the electrode layer 10 in a direction perpendicular to the laminating direction, a side surface of the insulating layer 13, a side surface of the electrode active material 12, and a side surface of the collector 11 are flush with one another. Further, at an end of the counter-electrode layer 20 in a direction perpendicular to the laminating direction, a side surface of the insulating layer 23, a side surface of the counter-electrode active material layer 22, and a side surface of the collector 21 are flush with one another. That is, at an end of the battery 50 in a direction perpendicular to the laminating direction, the respective side surfaces of the collector 11, the insulating layer 13, the electrode active material layer 12, the solid electrolyte layer 30, the counter-electrode active material layer 22, the insulating layer 23, and the collector 21 are flush with one another, and form the same flat surface. This makes the side surfaces of the layers of the battery 50 free from steps or asperities, thus preventing the formation of a space that does not function as a battery due to asperities and bringing about improvement in substantive volume energy density of the battery 50. Further, since the side surfaces of the layers can be made flush with one another, for example, by cutting the layers all at once, the battery 50 can be manufactured with the areas of the insulating layers 13 and 23 easily adjusted.

The side surface of the battery 50 is for example a cut surface. Specifically, the side surface of the battery 50 is a surface formed by being cut with the edge of a cutter or other tools for cutting and, for example, is a surface having traces of cutting such as fine grooves. Since the battery 50 has a cut surface formed by being thus cut, the locations to form the insulating layer 13 and the insulating layer 23 can be adjusted. This makes it possible to reduce the areas of portions (i.e. portions in which the insulating layer 13 and the insulating layer 23 are formed, which will be described in detail later) that do not contribute to the charge-discharge performance of the battery 50, making it possible to improve the volume energy density. Further, since the side surface of the battery 50 is a cut surface, the side surface of the electrode layer 10, the side surface of the counter-electrode layer 20, and the side surface of the solid electrolyte layer 30 can be easily made flush with one another. It should be noted that the traces of cutting may be smoothed by polishing. The cut surface is not limited to particular shapes; however, in the case of the battery 50, the cut surface is rectangular.

Further, in the battery 50, the respective side surfaces of the collector 11, the insulating layer 13, the electrode active material layer 12, the solid electrolyte layer 30, the counter-electrode active material layer 22, the insulating layer 23, and the collector 21 are exposed. In other words, the collector 11, the insulating layer 13, the electrode active material layer 12, the solid electrolyte layer 30, the counter-electrode active material layer 22, the insulating layer 23, and the collector 21 are disposed in such a positional relationship as not to cover one another's outer peripheral side surfaces. This brings about improvement in volume energy density of the battery 50, and as layers that contribute to the charge-discharge performance of the battery 50 are present to ends of the battery 50. It should be noted that an exposed side surface may be covered with a terminal, a sealing member, or other members. That is, the aforementioned "exposed" means that each of the layers laminated in the battery 50 does not cover a side surface of another layer at ends.

Further, in the battery 50, the collector 11, the electrode active material layer 12, the solid electrolyte layer 30, the counter-electrode active material layer 22, and the collector 21 have the same shape and position in plan view. Further, the planimetric shapes of the collector 11, the electrode active material layer 12, the solid electrolyte layer 30, the counter-electrode active material layer 22, and the collector 21 are rectangles, but are not limited to particular shapes and may be circles, ellipses, polygons, or other shapes.

The collector 11 is in contact with lower surfaces of the electrode active material layer 12 and the insulating layer 13, and covers the lower surfaces of the electrode active material layer 12 and the insulating layer 13. At ends of the collector 11 in plan view, the insulating layer 13 is laminated. The thickness of the collector 11 is for example greater than or equal to 5 µm and smaller than or equal to 100 µm.

As a material of the collector 11, a publicly-known material may be used. As the collector 11, a foil-like body, a plate-like body, a net-like body, or other bodies composed of, for example, copper, aluminum, nickel, irons, stainless steel, platinum, gold, an alloy of two or more types thereof, or other substances are used.

The electrode active material layer 12 is laminated above the collector 11 so as to cover the insulating layer 13, which is on top of the collector 11. The lower surface of the electrode active material layer 12 is also in contact with the collector 11. An upper surface of the electrode active material layer 12 is in contact with the solid electrolyte layer 30. The electrode active material layer 12 and the counter-electrode active material layer 22 face each other across the solid electrolyte layer 30. The electrode active material layer 12 has a region that does not overlap the insulating layer 13 in plan view. Further, the electrode active material layer 12 and the counter-electrode active material layer 22 have the same shape and position in plan view. The thickness of the electrode active material layer 12 is for example greater than or equal to 5 µm and smaller than or equal to 300 µm. A material for use in the electrode active material layer 12 will be described later.

As mentioned above, the insulating layer 13 is located between the collector 11 and the electrode active material layer 12. An upper surface of the insulating layer 13 and an inner side surface of the insulating layer 13 in plan view are in contact with the electrode active material layer 12. The insulating layer 13 is in contact with the electrode active material layer 12 at the ends of the electrode layer 10 in plan view. The side surface of the insulating layer 13 and the side surface of the collector 11 are flush with each other. Further, the side surface of the insulating layer 13 and the side surface of the electrode active material 12 are flush with each other. The lower surface of the insulating layer 13 is in contact with the collector 11. Further, the insulating layer 13 overlaps the counter-electrode active material layer 22 in plan view.

In the illustrated example, the insulating layer 13 is in the shape of a frame located on the outer periphery of the electrode layer 10 in plan view. That is, the insulating layer 13 is located between the collector 11 and the electrode active material layer 12 at all ends of the electrode layer 10 in directions perpendicular to the laminating direction.

The insulating layer 13 contains, for example, at least one of resin and a metal oxide. Examples of the resin include silicone resin, epoxy resin, and polyimide resin. The resin may be thermosetting resin or ultraviolet-curable resin. The inclusion of the resin by the insulating layer 13 makes it possible to enhance the bondability between the insulating layer 13 and the collector 11 and between the insulating layer 13 and the electrode active material layer 12, for example, through an anchor effect by which the resin penetrates into the collector 11 and the electrode active material layer 12. Examples of the metal oxide include silicon oxide, titanium oxide, and aluminum oxide. The inclusion of the metal oxide by the insulating layer 13 makes the insulating layer 13 hard. Therefore, even in a case where the insulating layer 13 is thinly formed at the time of manufacture of the battery 50, the insulating layer 13 hardly deforms in being laminated on another layer. The insulating layer 13 thus formed can be a thin layer of uniform thickness.

The thickness of the insulating layer 13 is for example thinner than the thickness of the electrode active material layer 12. Further, the thickness of the insulating layer 13 is greater than or equal to half of the thickness of the collector 11. This makes it easy to, even in a case where a terminal is formed on a side surface of the collector 11, recognize where to form the terminal. Further, even in a case where the terminal is formed from conductive resin or other materials, the insulating layer 13 brings about improvement in wettability of the conductive resin, making it possible to easily form the terminal. From the point of view of enhancing these effects, the thickness of the insulating layer 13 may be greater than or equal to 80% of the thickness of the collector 11, or may be greater than or equal to the thickness of the collector 11. Further, the thickness of the insulating layer 13 is for example greater than or equal to 5 µm, or may be greater than or equal to 10 µm. The insulating layer 13 is for example completely insulative; however, depending on battery characteristics required, the insulating layer 13 may slightly have electrical conductivity due to a constituent material and thickness of the insulating layer 13.

Further, the insulating layer 13 is located in a region in which a length of the electrode active material layer 12 from the outer periphery, for example, in plan view is smaller than or equal to 1 mm from the point of view of an effective area that contributes to power generation, e.g. from the point of view of volume energy density. That is, the length of the insulating layer 13 from the outer periphery toward the center of the battery 50 is for example smaller than or equal to 1 mm. Further, a width of the insulating layer 13 in a case where the insulating layer 13 is formed in the shape of a frame or a line or other shapes is for example smaller than or equal to 1 mm, and may be smaller than or equal to 0.5 mm or may be smaller than or equal to 0.1 mm from the point of view of volume energy density. The width of the insulating layer 13 is changed, for example, depending on battery characteristics required.

Further, in a plan view, the length of the insulating layer 23 from the outer periphery toward the center of the battery 50 is greater than the length of the insulating layer 23 from the outer periphery toward the center of the battery 50. In a plan view, the insulating layer 13 is also present in a region of the battery 50 that is further inward than a region in which the insulating layer 23 is formed.

The collector 21 is in contact with an upper surface of the counter-electrode active material layer 22 and an upper surface of the insulating layer 23, and covers the upper surface of the counter-electrode active material layer 22 and the upper surface of the insulating layer 23. The thickness of the collector 21 is for example greater than or equal to 5 µm and smaller than or equal to 100 µm. As a material of the collector 21, the material of the aforementioned collector 11 may be used.

The counter-electrode active material layer 22 is laminated on top of the solid electrolyte layer 30, and is placed opposite the electrode active material layer 12. The upper surface of the counter-electrode active material layer 22 is in contact with the collector 21. Further, the counter-electrode active material layer 22 is in contact with a lower surface of the insulating layer 23, and covers the lower surface of the insulating layer 23. The counter-electrode active material layer 22 has a region that does not overlap the insulating layer 23 in plan view. The thickness of the counter-electrode active material layer 22 is for example greater than or equal to 5 µm and smaller than or equal to 300 µm. A material for use in the counter-electrode active material layer 22 will be described later.

As mentioned above, the insulating layer 23 is located between the collector 21 and the counter-electrode active material layer 22. An upper surface of the insulating layer 23 and an inner side surface of the insulating layer 23 in plan view are in contact with the counter-electrode active material layer 22. The insulating layer 23 is in contact with the counter-electrode active material layer 22 at the ends of the counter-electrode layer 20 in plan view. The side surface of the insulating layer 23 and the side surface of the collector 21 are flush with each other. The side surface of the insulating layer 23 and the side surface of the counter-electrode active material layer 22 are flush with each other. The lower surface of the insulating layer 23 is in contact with the collector 21. Further, the insulating layer 23 overlaps the insulating layer 13 in plan view.

In the illustrated example, the insulating layer 23 is in the shape of a frame located on the outer periphery of the counter-electrode layer 20 in plan view. That is, the insulating layer 23 is located between the collector 21 and the counter-electrode active material layer 22 at all ends of the counter-electrode layer 20 in directions perpendicular to the laminating direction.

As a material of the insulating layer 23, any of the materials enumerated in the foregoing description of the insulating layer 13 may be used. The insulating layer 13 and the insulating layer 23 are made, for example, from the same material. This makes it possible to easily manufacture the battery 50 without the need to use different materials for the insulating layer 13 and the insulating layer 23. It should be noted that the insulating layer 13 and the insulating layer 23 may be made from different materials.

The thickness of the insulating layer 23 is for example thinner than the thickness of the counter-electrode active material layer 22. Further, the thickness of the insulating layer 23 is greater than or equal to half of the thickness of the collector 21. This makes it easy to, even in a case where a terminal is formed on a side surface of the collector 21, recognize where to form the terminal. Further, even in a case where the terminal is formed from conductive resin or other materials, the insulating layer 23 brings about improvement in wettability of the conductive resin, making it possible to easily form the terminal. From the point of view of enhancing these effects, the thickness of the insulating layer 23 may be greater than or equal to 80% of the thickness of the collector 21, or may be greater than or equal to the thickness of the collector 21. Further, the thickness of the insulating layer 23 is for example greater than or equal to 5 µm, or may be greater than or equal to 10 µm. The insulating layer 23 is for example completely insulative; however, depending on battery characteristics required, the insulating layer 23 may slightly have electrical conductivity due to a constituent material and thickness of the insulating layer 23.

Further, the insulating layer 23 is located in a region in which a length of the counter-electrode active material layer 22 from the outer periphery, for example, in plan view is smaller than or equal to 1 mm from the point of view of an effective area that contributes to power generation, e.g. from the point of view of volume energy density. That is, the length of the insulating layer 23 from the outer periphery toward the center of the battery 50 is for example smaller than or equal to 1 mm. Further, a width of the insulating layer 23 in a case where the insulating layer 23 is formed in the shape of a frame or a line or other shapes is for example smaller than or equal to 1 mm, and may be smaller than or equal to 0.5 mm or may be smaller than or equal to 0.1 mm from the point of view of volume energy density. The width of the insulating layer 23 is changed, for example, depending on battery characteristics required.

The solid electrolyte layer 30 is located between the electrode active material later 12 and the counter-electrode active material layer 22. The thickness of the solid electrolyte layer 30 is for example greater than or equal to 5 µm and smaller than or equal to 150 µm.

The solid electrolyte layer 30 contains at least a solid electrolyte and, if necessary, may contain a binder material. The solid electrolyte layer 30 may contain a solid electrolyte having lithium-ion conductivity.

As the solid electrolyte, a publicly-known material such as a lithium-ion conductor, a sodium-ion conductor, or a magnesium-ion conductor may be used. As the solid electrolyte, for example, a solid electrolyte material such as a sulfide solid electrolyte, a halogenated solid electrolyte, or an oxide solid electrolyte is used. In the case of a material that is able to conduct lithium ions, for example, a synthetic substance composed of lithium sulfide (Li₂S) and diphosphorous pentasulfide (P₂S₅) is used as the sulfide solid electrolyte. Further, as the sulfide solid electrolyte, a sulfide such as Li₂S-SiS₂, Li₂S-B₂S₃, or Li₂S-GeS₂ may be used, or a sulfide obtained by adding at least one type of Li₃N, LiCl, LiBr, Li₃PO₄, or Li₄SiO₄ as an additive to the aforementioned sulfide may be used.

In the case of a material that is able to conduct lithium ions, for example, Li₇La₃Zr₂O₁₂ (LLZ), Li_{1.3}Al_{0.3}Ti_{1.7}(PO₄)₃ (LATP), (La,Li)TiO₃ (LLTO), or other substances are used as the oxide solid electrolyte.

As the binder material, for example, elastomers are used, or an organic compound such as polyvinylidene fluoride, acrylic resin, or cellulose resin may be used.

In the present embodiment, one of the electrode layer 10, which includes the electrode active material layer 12, and the counter-electrode layer 20, which includes the counter-electrode active material layer 22, is a positive-electrode layer including a positive-electrode active material layer, and the other is a negative-electrode layer including a negative-electrode active material layer.

The positive-electrode active material layer contains at least a positive-electrode active material and, if necessary, may contain at least one of a solid electrolyte, a conductive aid, and a binder material.

As the positive-electrode active material, a publicly-known material that is capable of occlusion and ejection (insertion and desorption or dissolution and deposition) of lithium ions, sodium ions, or magnesium ions may be used. In the case of a material that is capable of desorption and insertion of lithium ions, for example, a lithium cobalt oxide complex oxide (LCO), a lithium nickel oxide complex oxide (LNO), a lithium manganese oxide complex oxide (LMO), a lithium-manganese-nickel complex oxide (LMNO), a lithium-manganese-cobalt complex oxide (LMCO), a lithium-nickel-cobalt complex oxide (LNCO), a lithium-nickel-manganese-cobalt complex oxide (LNMCO), or other substances are used as the positive-electrode active material.

As the solid electrolyte, the aforementioned solid electrolyte material may be used. Further, as the conductive aid, for example, a conducting material such as acetylene black, carbon black, graphite, or carbon fiber is used. Further, as the binder material, the aforementioned binder material may be used.

The negative-electrode active material layer contains at least a negative-electrode active material and, if necessary, may contain at least one of a solid electrolyte, a conductive aid, and a binder material similar to that of the positive-electrode active material layer.

As the negative-electrode active material, a publicly-known material that is capable of occlusion and ejection (insertion and desorption or dissolution and deposition) of lithium ions, sodium ions, or magnesium ions may be used. In the case of a material that is capable of desorption and insertion of lithium ions, for example, a carbon material such as natural graphite, synthetic graphite, graphite carbon fiber, or resin heat-treated carbon, metal lithium, a lithium alloy, an oxide of lithium and a transition metal element, or other substances are used as the negative-electrode active material.

Meanwhile, the battery 50 includes an electrode layer 10, a counter-electrode layer 20 placed opposite to the electrode layer 10, and a solid electrolyte layer 30 located between the electrode layer 10 and the counter-electrode layer 20. The electrode layer 10 includes a collector 11, an electrode active material layer 12 located between the collector 11 and the solid electrolyte layer 30, and an insulating layer 13 located between the collector 11 and the electrode active material layer 12 at ends of the electrode layer 10 in plan view. The counter-electrode layer 20 includes a collector 21, a counter-electrode active material layer 22 located between the collector 21 and the solid electrolyte layer 30, and an insulating layer 23 located between the collector 21 and the counter-electrode active material layer 22 at ends of the counter-electrode layer 20 in plan view.

For this reason, even if the collector 11 and the collector 21 delaminate at the ends of the collector 11 and the collector 21, at which delamination tends to occur, exposure of the electrode active material layer 12 and the counter-electrode active material layer 22 is reduced, as the insulating layer 13 is present between the collector 11 and the electrode active material layer 12 and the insulating layer 23 is present between the collector 21 and the counter-electrode active material layer 22, so that it becomes hard for damage, a short circuit, or other failures to occur due to contact between the electrode active material layer 12 and another member or between the counter-electrode active material layer 22 and another member. This brings about improvement in reliability of the battery 50. Furthermore, even in a case where terminals through which to take out an electrical current are formed on side surfaces of the collector 11 and the collector 21, the insulating layer 13 and the insulating layer 23 serve as marks to make it easy to recognize where to form the terminals. Further, even in a case where the terminals are formed from a material such as conductive resin, the insulating layer 13 and the insulating layer 23 bring about improvement in wettability of the material, making it possible to easily form the terminals. This reduces the occurrence of a short circuit, a faulty connection, or other failures due to defective formation of the terminals, thus bringing about improvement in reliability of the battery 50.

Further, at an end of the electrode layer 10, a side surface of the collector 11 and a side surface of the insulating layer 13 are flush with each other, and at an end of the counter-electrode layer 20, a side surface of the collector 21 and a side surface of the insulating layer 23 are flush with each other. This causes regions in which to form the terminals to have flat surfaces, thus making it possible to easily form the terminals.

Since the respective side surfaces of the collector 11, the insulating layer 13, the electrode active material layer 12, the solid electrolyte layer 30, the counter-electrode active material layer 22, the insulating layer 23, and the collector 21 are flush with one another, the battery 50 can be manufactured with the areas of the insulating layers 13 and 23 easily adjusted, for example, by cutting the layers all at once. Therefore, although the presence of the insulating layer 13 and the insulating layer 23 inhibits the electrode active material layer 12 and the collector 11 from giving and receiving ions to and from each other and the counter-electrode active material layer 22 and the collector 21 from giving and receiving ions to and from each other and results in the formation of regions in which the electrode active material layer 12 and the counter-electrode active material layer 22 hardly function as electrodes, these regions can be minimized by adjusting the areas of the insulating layer 13 and the insulating layer 23. This makes it possible to increase the volume energy density of the battery 50.

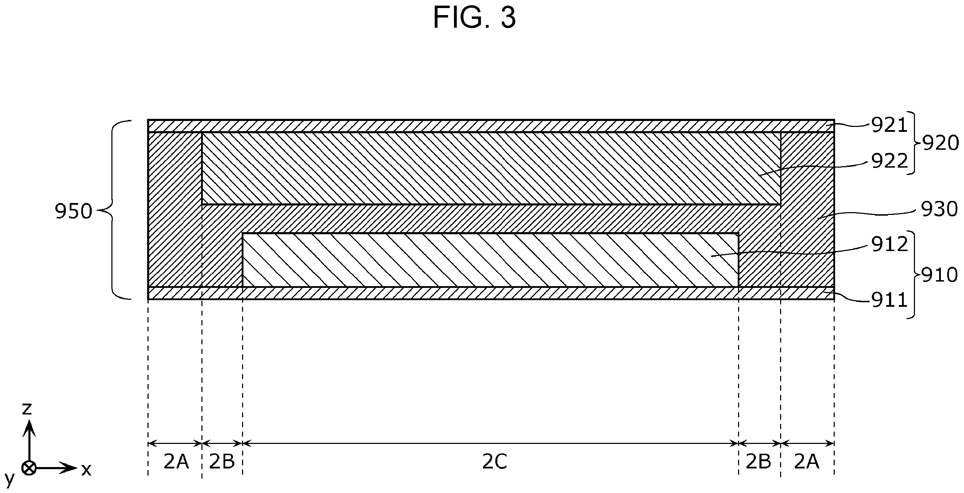

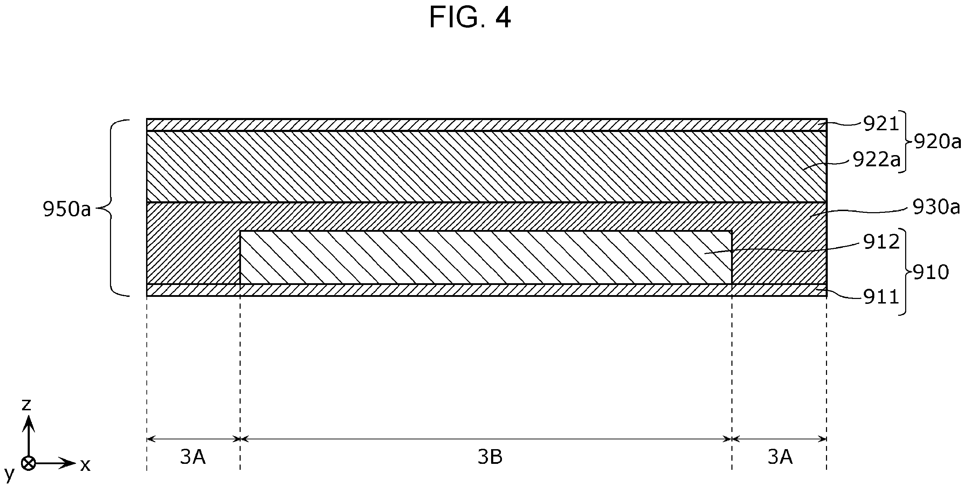

Further, the length of the insulating layer 13 from the outer periphery toward the center of the battery 50 is for example greater than he length of the insulating layer 23 from the outer periphery toward the center of the battery 50. This makes it easy to protect the electrode active material layer 12 even in a case where the collector 11 is more likely to delaminate than the collector 21, as the length of the insulating layer 13 is great. Further, in a case where the electrode layer 10 is a positive-electrode layer and the counter-electrode layer 20 is a negative-electrode layer, the effect of reducing the formation of dendrite on the counter-electrode layer 20 is brought about. This point is described in detail with reference to batteries 950 and 950a according to a comparative example in which the area of a negative-electrode active material layer is larger than the area of a positive-electrode active material layer in plan view. In the case of manufacture of a battery, it is common to make the area of a negative-electrode active material layer larger than the area of a positive-electrode active material layer. This is intended to improve the reliability of the battery by making the capacitance of the negative-electrode active material layer larger than the capacitance of the positive-electrode active material layer to suppress, for example, deposition of metal derived from metal ions, i.e. dendrite, not incorporated into the negative-electrode active material layer. Furthermore, disposing ends of the negative-electrode active material layer further toward the outside than ends of the positive-electrode active material layer makes it possible to suppress the concentration of electric fields at the ends of the negative-electrode active material layer to inhibit dendrite growth (deposition of metal). Figs. 3 and 4 are schematic cross-sectional views showing examples of the batteries according to the comparative example.

As shown in Fig. 3, the battery 950 includes a positive-electrode layer 910, a negative-electrode layer 920, and a solid electrolyte layer 930 located between the positive-electrode layer 910 and the negative-electrode layer 920. The positive-electrode layer 910 includes a collector 911 and a positive-electrode active material layer 912 located between the collector 911 and the solid electrolyte layer 930. The negative-electrode layer 920 includes a collector 921 and a negative-electrode active material layer 922 located between the collector 921 and the solid electrolyte layer 930. The solid electrolyte layer 930 covers side surfaces of the positive-electrode active material layer 912 and the negative-electrode active material layer 922, and is in contact with the collector 911 and the collector 921. In a plan view of the battery 950, the area of the negative-electrode active material layer 922 is larger than the area of the positive-electrode active material layer 912, and ends of the negative-electrode active material layer 922 are located further toward the outside than ends of the positive-electrode active material layer 912. Thus, in the battery 950, deposition of metal is suppressed by making the area of the negative-electrode active material layer 922 is larger than the area of the positive-electrode active material layer 912. Further, the presence of the solid electrolyte layer 930 at ends of the battery 950 reduces exposure of the positive-electrode active material layer 912 and the negative-electrode active material layer 922 even in a case where the collector 911 and the collector 921 delaminate from the ends.

A region 2C in which the positive-electrode active material layer 912 and the negative-electrode active material layer 922 are present functions as a battery. Meanwhile, a region 2A in which neither the positive-electrode active material layer 912 nor the negative-electrode active material layer 922 is present does not function as a battery. Further, a region 2B in which the negative-electrode active material layer 922 is present but the positive-electrode active material layer 912 is not present does not function as a battery, either. The region 2B is a region that is equivalent to the difference in area between the positive-electrode active material layer 912 and the negative-electrode active material layer 922. As the region 2B and the region 2A become wider in plan view, the proportion of regions in the battery 950 that do not contribute to power generation increases, with the result that the volume energy density of the battery 950 decreases. Meanwhile, as the region 2B becomes narrower in plan view, higher alignment accuracy is required in manufacturing steps such as steps of laminating the respective layers, and the higher-accuracy requirements entail concern about an increase in the number of steps such as inspections and an increase in facility cost.

Further, the regions 2A, 2B, and 2C differ from one another in type and number of layers other than the collectors 911 and 921 that are present in a thickness direction. That is, in the region 2A, only one layer, namely the solid electrolyte layer 930, is present. In the region 2B, two layers, namely the negative-electrode active material layer 922 and the solid electrolyte layer 930, are present. In the region 2C, three layers, namely the positive-electrode active material layer 912, the negative-electrode active material layer 922, and the solid electrolyte layer 930, are present. In the case of an all-solid-state battery composed of powder materials, manufacturing steps may include a high-pressure press process to form a favorable interface between the powder materials (e.g. an interface with high bondability between the powder materials and with low grain boundary resistivity), i.e. to improve the reliability of the battery and improve the volume energy density by being highly filled. At this point in time, the regions 2A, 2B, and 2C differ in type and number of layers that constitute the regions, and the layers differ in compressibility from one another. This raises concern that when the whole battery 950 is pressed, the regions may differ in degree of compression from one another or may not be uniformly compressed. For example, there is concern that the regions 2A and 2B may be less sufficiently compressed than the region 2C and may suffer from reduced reliability such as the delamination of the layers.

That is, the battery 950 is undesirably hard to easily manufacture and insufficient in improvement of reliability. Further, since the region 2A, whose sole through-thickness layer is the solid electrolyte layer 930, is a portion that does not particularly contribute to the basis charge-discharge performance of the battery, it is preferable, from the point of view of improving the volume energy density, that the region 2A be small.

Further, the battery 950 shown in Fig. 4 includes a positive-electrode layer 910 having a collector 911 and a positive-electrode active material layer 912, a negative-electrode layer 920a having a collector 921a and a negative-electrode active material layer 922a, and a solid electrolyte layer 930a. The battery 950a differs from the battery 950 in that the solid electrolyte layer 930a does not cover a side surface of the negative-electrode active material layer 922a. The battery 950a does not have a region, such as the region 2A, in which neither the positive-electrode active material layer 912 nor the negative-electrode active material layer 922 is present, but has a region 3A in which the positive-electrode active material layer 912 is not present. Therefore, the region 3A does not contribute to power generation, and a problem similar to that which arises in the region 2B arises in the region 3A of the battery 950a too.

Meanwhile, the battery 50 includes an electrode layer having an insulating layer 13 and a counter-electrode layer 20 having an insulating layer 23. In the battery 50, for example, the electrode layer 10, which includes the electrode active material layer 12, is a positive-electrode layer including a positive-electrode active material layer, and the counter-electrode layer 20, which includes the counter-electrode active material layer 22, is a negative-electrode layer including a negative-electrode active material layer. In this case, the positive-electrode active material layer (electrode active material layer 12), which is in contact with the insulating layer 13, is not directly reached by electrons from the collector 11, so that a portion of the positive-electrode active material layer that is in a region 1A shown in Fig. 2 hardly functions as an electrode. Meanwhile, a portion of the positive-electrode active material layer that is in a region 1B functions as an electrode. Further, the negative-electrode active material layer (counter-electrode active material layer 22), which is in contact with the insulating layer 23, is not directly reached by electrons from the collector 21, so that a portion of the negative-electrode active material layer that is in a region 1AA shown in Fig. 2 hardly functions as an electrode. Meanwhile, a portion of the negative-electrode active material layer that is in a region 1BB functions as an electrode. In the battery 50, although the areas of the positive-electrode active material layer and the negative-electrode active material layer in plan view are equal, an effect of reducing the area of the positive-electrode active material layer in plan view is substantially brought about by a relative decrease in area of a region of the positive-electrode active material layer that easily functions as an electrode, as the region 1A is wider than the region 1AA and the region 1B is narrower than the region 1BB. That is, in the battery 50, deposition of metal is suppressed even when the areas of the positive-electrode active material layer and the negative-electrode active material layer in plan view are equal.

Further, since the positive-electrode active material layer and the negative-electrode active material layer have the same shape and position in plan view, the insulating layer 13 is located at the ends of the positive-electrode layer (electrode layer 10), and the insulating layer 23 is located at the ends of the negative-electrode layer (counter-electrode layer 20), a region in the negative-electrode active material layer that functions as an electrode is located further outward than a region in the positive-electrode active material layer that functions an electrode. As a result, the concentration of electric fields at the ends of a region of the negative-electrode active material layer that functions as an electrode is suppressed, so that dendrite growth at the ends is inhibited. This brings about improvement in reliability of the battery 50.

Furthermore, at the time of manufacture of the battery 50, it is not necessary to form the positive-electrode active material layer or the negative-electrode active material layer with high position and area accuracy, as the substantive areas of the positive-electrode active material layer and the negative-electrode active material layer can be adjusted by the insulating layer 13 and the insulating layer 23, respectively. This makes it possible to easily manufacture the battery 50. For example, the battery 50 is easily manufactured, for example, by cutting, in a region including the insulating layer 13 and the insulating layer 23, a laminated body obtained by laminating the positive-electrode layer (electrode layer 10), the solid electrolyte layer 30, and the negative-electrode layer (counter-electrode layer 20).

Further, since the insulating layer 13 is located between the collector 11 and the electrode active material layer 12, the electrode active material layer 12 is also present on top of the insulating layer 13. Further, since the insulating layer 23 is located between the collector 21 and the counter-electrode active material layer 22, the counter-electrode active material layer 22 is also present on top of the insulating layer 23. Therefore, even in a case where a high-pressure press process is performed, all regions are more easily uniformly compressed than, for example, in a case where solid electrolyte layers are present on the side surfaces of the electrode active material layer 12 and the counter-electrode active material layer 22 as in the case of a battery according to the aforementioned comparative example. This makes it hard for the layers of the battery 50 to delaminate and makes it possible to improve the reliability and volume energy density of the battery 50 through a high-pressure press process.

### [Manufacturing Method]

The following describes a method for manufacturing a battery according to the present embodiment. It should be noted that the following method for manufacturing a battery 50 is just an example, and the method for manufacturing a battery 50 is not limited to the following example.

The method for manufacturing a battery 50 includes an insulating layer laminating step, a power-generating element laminating step, a collector laminating step, and a cutting step. The following describes each of the steps in detail.

### (1) Insulating Layer Laminating Step

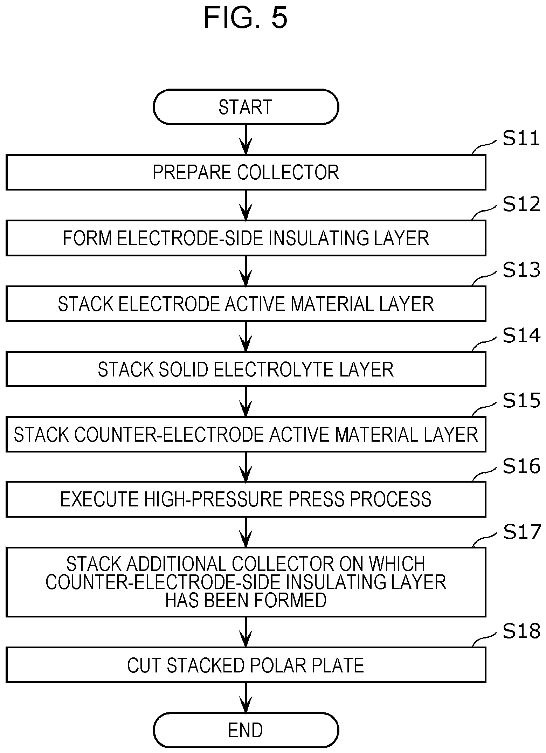

First, the insulating layer laminating step is described. Fig. 5 is a flow chart for explaining a method for manufacturing a battery according to the present embodiment.

In the insulating layer laminating step, an insulating layer 13 is laminated on at least one surface of a collector 11. Specifically, first, the collector 11 is prepared (step S1 1 of Fig. 5). Then, the insulating layer 13 is formed as an electrode-side insulating layer on at least one surface of the collector 11 thus prepared (step S12 of Fig. 5). For example, the insulating layer 13 is formed on the collector 11 by laminating the insulating layer 13 on an upper surface of the collector 11. In the description of the present manufacturing method, the collector 11 is an example of a first collector, and the insulating layer 13 is an example of a first insulating layer.

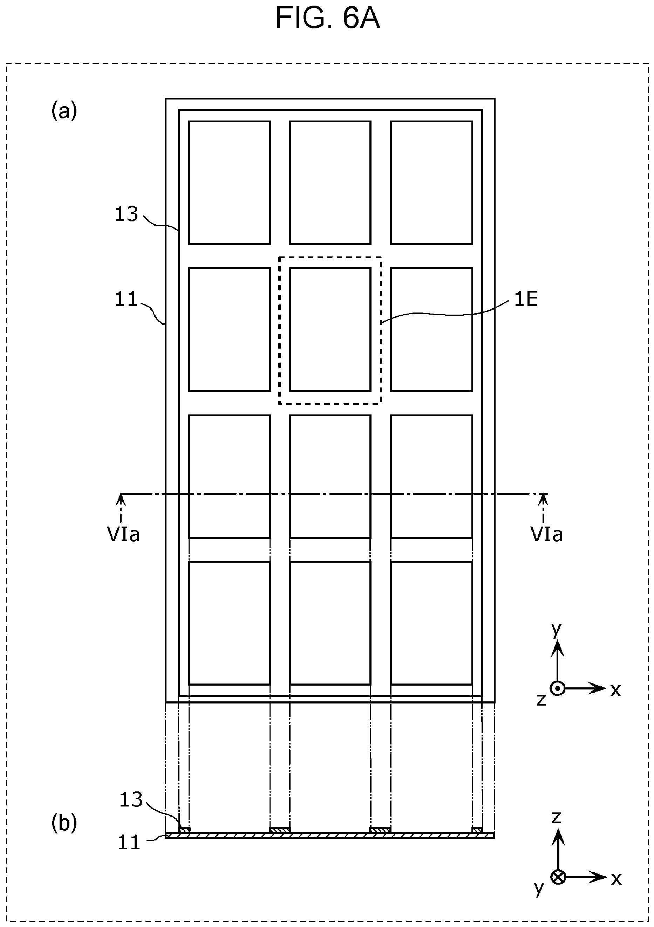

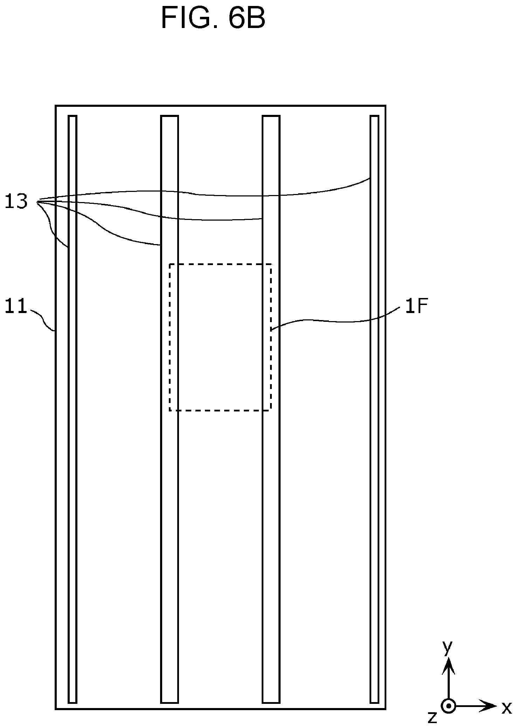

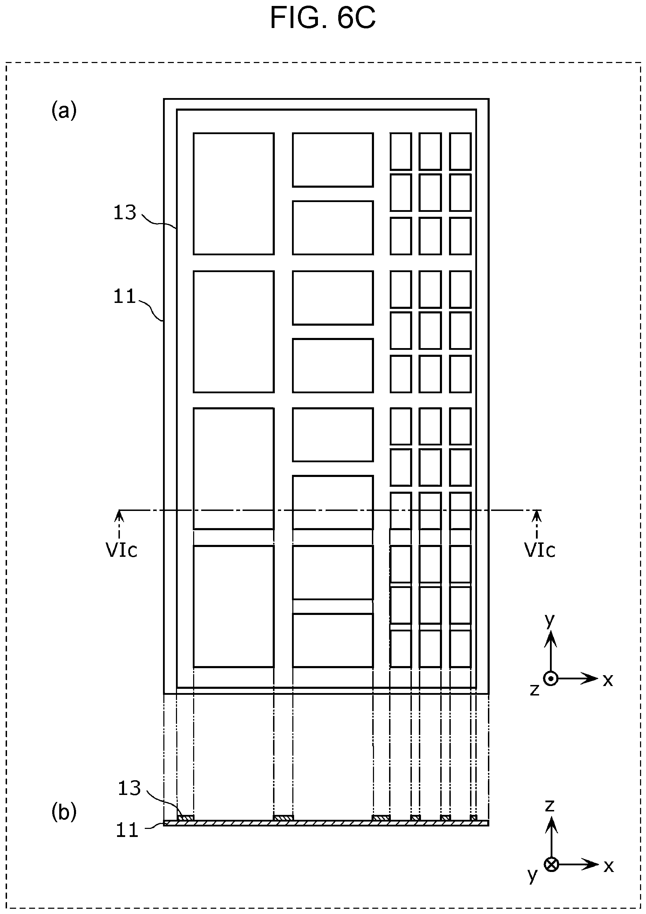

Figs. 6A, 6B, and 6C are schematic views showing examples of laminated combinations of a collector 11 and an insulating layer 13. (a) of Fig. 6A is a top view showing an example of a laminated combination of a collector 11 and an insulating layer 13, and (b) of Fig. 6A is a cross-sectional view taken along line VIa-VIa in (a) of Fig. 6A. For example, as shown in Fig. 6A, the insulating layer 13 is formed into a grating shape. Further, Fig. 6B is a top view showing another example of a laminated combination of a collector 11 and an insulating layer 13. Although Fig. 6B does not illustrate a cross-sectional view, the laminated combination of the collector 11 and the insulating layer 13 shown in Fig. 6B has a cross-sectional structure similar to that of (b) of Fig.6A. As shown in Fig. 6B, the insulating layer 13 may be formed into a striped shape. By thus laminating the insulating layer 13 into a comparatively simple planimetric shape, such as a grating shape or a striped shape, having an elongated portion, the insulating layer 13 can be easily formed on the collector 11. Further, by the insulating layer 13 being divided along a direction parallel with the length of the insulating layer 13 in the after-mentioned cutting step, a battery 50 can be easily formed with the insulating layer 13 formed along ends of the battery 50. Figs. 6A and 6B, rectangular regions 1E and 1F indicated by dotted lines are equivalent to the size of one battery 50. Thus, the insulating layer 13 may be laminated on the collector 11 so that the insulating layer 13 can be divided into a plurality of batteries in a later manufacturing step.

Further, (a) of Fig. 6C is a top view showing still another example of a laminated combination of a collector 11 and an insulating layer 13, and (b) of Fig. 6C is a cross-sectional view taken along line VIc-VIc in (a) of Fig. 6C. As shown in Fig. 6C, a grating-shaped insulating layer 13 of multiple types of pattern (e.g. grating space) may be formed on top of the collector 11.

By the insulating layer 13 being thus laminated into a grating shape or a striped shape and divided along a direction parallel with the length of the grating shape or the striped shape of the insulating layer 13 in the after-mentioned cutting step, a plurality of batteries 50 of the same shape or different shapes can be simultaneously manufactured. This brings about improvement in efficiency in the manufacture of batteries 50.

As a method for forming the insulating layer 13, there are a variety of possible processes; however, from the point of view of mass-producibility, for example, an application process is used. For example, paint obtained by dispersing an insulating substance (e.g. a metal oxide) into a solvent is applied onto the collector 11 as a material of the insulating layer 13 by a high-accuracy coating method such as a gravure roll method or an inkjet method in a continuous process such as a roll-to-roll process, and the solvent is evaporated by drying, whereby the insulating layer 13 can be obtained. This makes it possible to thinly laminate the insulating layer 13, so that the insulating layer 13 thus formed is a thin layer of uniform thickness. Therefore, in a case where a high-pressure press process is performed in laminating another layer in the after-mentioned power-generating element laminating step, the layer is hardly affected by the insulating layer 13 and easily uniformly compressed. Further, by using such a high-accuracy coating method, the accuracy of the area of the electrode active material layer 12 that is substantially effective as an electrode is increased.

In a case where resin is used as the material of the insulating layer 13, a solution obtained by dissolving or dispersing resin may be applied onto the collector 11, or ultraviolet-curable resin or thermosetting resin may be applied onto the collector 11 and subjected to a curing process. It should be noted that the formation of the insulating layer 13 is not limited to a continuous process such as a roll-to-roll process, but may be a batch process for forming the insulating layer 13 for each single collector 11.

As the solvent for use in the formation of the insulating layer 13, a common organic solvent, aqueous solvent, or other solvents in which a metal oxide or resin is dispersed or dissolved may be used.

### (2) Power-generating Element Laminating Step

Next, the power-generating element laminating step is described. In the power-generating element laminating step, a power-generating element 40 obtained by laminating an electrode active material layer 12, a solid electrolyte layer 30, and a counter-electrode active material layer 22 in this order and a laminated combination of the collector 11 and the insulating layer 13 laminated on the collector 11 in the insulating layer laminating step are laminated such that the electrode active material layer 12 covers the insulating layer 13. Thus, in the power-generating element laminating step, a covering structure is formed in which the electrode active material layer 12 covers the insulating layer 13.

In the power-generating element laminating step, the power-generating element 40 is formed, for example, by the electrode active material layer 12, the solid electrolyte layer 30, and the counter-electrode active material layer 22 being sequentially laminated over the collector 11. Specifically, the electrode active material layer 12, the solid electrolyte layer 30, and the counter-electrode active material layer 22 are laminated in this order on top of each other over the laminated combination of the collector 11 and the insulating layer 13 (steps S13, S14, and S15 of Fig. 5). For example, over the laminated combination of the collector 11 and the insulating layer 13, the electrode active material layer 12 is laminated so as to cover the insulating layer 13; furthermore, the solid electrolyte layer 30 and the counter-electrode active material layer 22 are sequentially laminated. Furthermore, if necessary, a high-pressure press process is performed on the electrode active material layer 12, the solid electrolyte layer 30, and the counter-electrode active material layer 22, which were laminated in steps S13, S14, and S15 (step S16 of Fig. 5). Further, if necessary, a heat treatment is performed on the electrode active material layer 12, the solid electrolyte layer 30, and the counter-electrode active material layer 22, which were laminated in steps S13, S14, and S15. This gives a laminated polar plate in which the power-generating element 40 is laminated on top of the laminated combination of the collector 11 and the insulating layer 13. In the power-generating element laminating step, a power-generating element 40 formed by the electrode active material layer 12, the solid electrolyte layer 30, and the counter-electrode active material layer 22 being laminated in advance may be laminated on the collector 11.

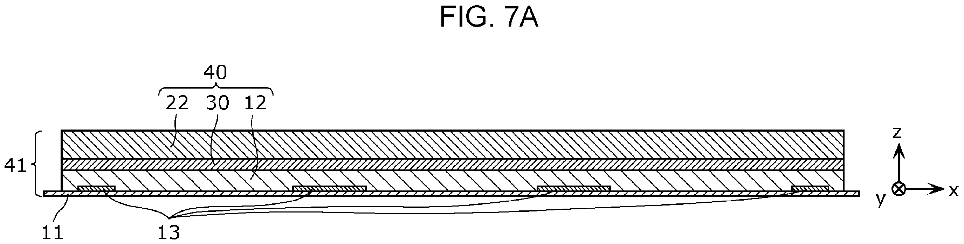

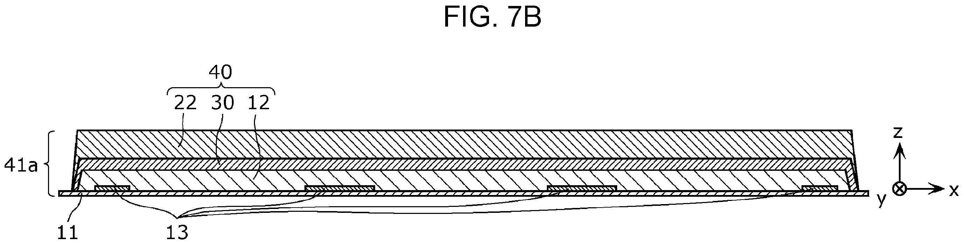

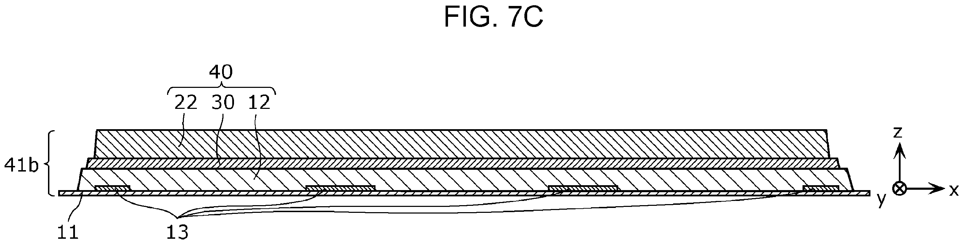

Figs. 7A, 7B, and 7C are schematic cross-sectional views showing examples of laminated polar plates according to the present embodiment. In a laminated polar plate 41, as shown in Fig. 7A, a power-generating element 40 obtained by laminating an electrode active material layer 12, a solid electrolyte layer 30, and a counter-electrode active material layer 22 in this order is laminated on top of a laminated combination of a collector 11 and an insulating layer 13. The laminated polar plate 41 is formed such that the electrode active material layer 12, the solid electrolyte layer 30, and the counter-electrode active material layer 22 have the same area and position in plan view. Further, the counter-electrode active material layer 22 has its upper surface exposed.

The structure of the laminated polar plate 41 is not limited to this example. For example, as shown in Fig. 7B, a laminated polar plate 41a is formed such that a solid electrolyte layer 30 covers side and upper surfaces of an electrode active material layer 12 and a counter-electrode active material layer 22 covers side and upper surfaces of the solid electrolyte layer 30. This reduces the occurrence of a short circuit due to contact between the electrode active material layer 12 and the counter-electrode active material layer 22 in the power-generating element laminating step, as the electrode active material layer 12 is covered with the solid electrolyte layer 30.

Further, for example, as shown in Fig. 7C, a laminated polar plate 41b is formed such that an electrode active material layer 12 is smaller in area than a solid electrolyte layer 30 in plan view and the solid electrolyte layer 30 is smaller in area than a counter-electrode active material layer 22 in plan view. Further, in a plan view, the counter-electrode active material layer 22 is located within the solid electrolyte layer 30, the solid electrolyte layer 30 is located within the electrode active material layer 12. Since the counter-electrode active material layer 22 is designed to be located within the solid electrolyte layer 30, the solid electrolyte layer 30 reduces the occurrence of a short-circuit due to contact between the electrode active material layer 12 and the counter-electrode active material layer 22 even if the counter-electrode active material layer 22 is laminated with a misalignment in plan view.

A laminated polar plate in the present embodiment may be a structure of any of the laminated polar plates 41, 41a, and 41b, or a structure other than the laminated polar plates 41, 41a, and 41b will do, provided such a structure is a structure in which a power-generating element 40 is laminated on top of a laminated combination of a collector 11 and an insulating layer 13.

The electrode active material layer 12, the solid electrolyte layer 30, and the counter-electrode active material layer 22, which constitute the power-generating element 40, are formed in sequence, for example, by using a wet coating method. The use of the wet coating method makes it possible to easily laminate the power-generating element 40 on the collector 11. Usable examples of the wet coating method include, but are not limited to, coating methods such as a die coating method, a doctor blade method, a roll coater method, a screen printing method, and an inkjet method.

In a case where the wet coating method is used, a paint-making step is executed in which slurries are obtained separately by appropriately mixing together each of the materials that form the electrode active material layer 12, the solid electrolyte layer 30, and the counter-electrode active material layer 22 (i.e. each of the aforementioned materials of the positive-electrode active material layer, the solid electrolyte layer 30, and the negative-electrode active material layer) and a solvent.

As the solvent for use in the paint-making step, a publicly-known solvent that is used in fabricating a publicly-known all-solid-state battery (e.g. a lithium-ion all-solid-state battery) may be used.

The slurries, obtained in the paint-making step, of the respective layers are applied over the collector 11 on which the insulating layer 13 has been formed. This layered coating is executed in the order of the electrode active material layer 12, the solid electrolyte layer 30, and then the counter-electrode active material layer 22. In so doing, the overlaying of a layer being overlaid first may be followed by the overlaying of a next layer, or the overlaying of the next layer may be started during the overlaying of the layer being overlaid first. That is, steps S13, S14, and S15 may be concurrently executed. The slurries of the respective layers are sequentially applied, and after all layers have been applied, a heat treatment that removes the solvents and the binder materials and a high-pressure press process that accelerates the filling of the materials of the respective layers are executed, for example. It should be noted that the heat treatment and the high-pressure press process may be executed each time a layer is overlaid. That is, step S16 may be executed between steps S13 and S14 and between steps S14 and S15. In the overlaying of the electrode active material layer 12, the solid electrolyte layer 30, and the counter-electrode active material layer 22, the heat treatment and the high-pressure press process may be executed each time one layer is overlaid, may be executed separately after any two layers have been overlaid and after one layer has been overlaid, or may be executed all at once after all three layers have been overlaid. Further, the high-pressure press process involves the use of, for example, a roll press, a flat-plate press, or other presses. It should be noted that at least one of the heat treatment and the high-pressure press process may not be performed.

Performing a layered coating method in this way makes it possible to improve the bondability of the interface between each of the layers, namely the collector 11, the insulating layer 13, the electrode active material layer 12, the solid electrolyte layer 30, and the counter-electrode active material layer 22, and another and reduce interface resistance, and also makes it possible to improve the bondability between the powder materials used in the electrode active material layer 12, the solid electrolyte layer 30, and the counter-electrode active material layer 22 and reduce grain boundary resistivity. That is, favorable interfaces are formed between each of the layers of the power-generating element 40 and another and between each of the powder materials contained in the respective layers and another.

It should be noted that the insulating layer laminating step and the power-generating element laminating step may be performed in a series of continuous processes such as roll-to-roll processes.

### (3) Collector Laminating Step and Cutting Step

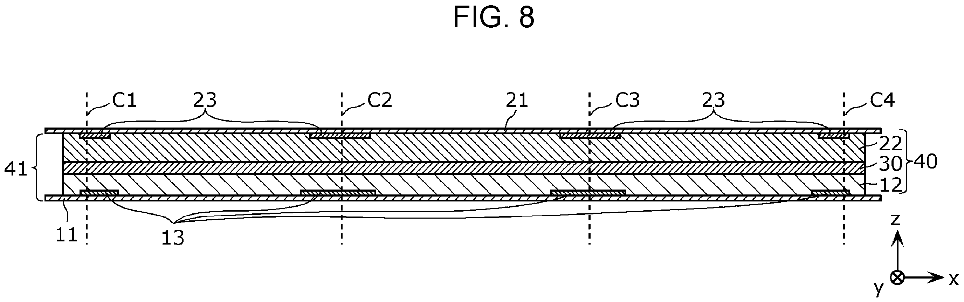

Next, the collector laminating step and the cutting step are described. Fig. 8 is a diagram for explaining the collector laminating step and cutting step of the method for manufacturing a battery according to the present embodiment. In the collector laminating step, an additional collector on which a counter-electrode-side insulating layer has been formed is laminated on the laminated polar plate (step S17 of Fig. 5). For example, as shown in Fig. 8, a collector 21 on which an insulating layer 23 has been formed is laminated on a surface of the power-generating element 40 of the laminated polar plate 41 that faces away from the collector 11 (i.e. a surface of the power-generating element 40 perpendicular to the laminating direction on which the collector 11 is not laminated). That is, the insulating layer 23 and the collector 21 are laminated on the power-generating element 40 laminated on the collector 11. In so doing, for example, the collector 21 on which the insulating layer 23 has been formed is bonded by a press process or other processes to the exposed upper surface of the counter-electrode active material layer 22 of the laminated polar plate 41. The press process is performed, for example, at lower pressure than the high-pressure press process performed in step S16. Further, the collector 21 on which the insulating layer 23 has been formed is laminated on the laminated polar plate 41 such that the insulating layer 23 is sandwiched between the counter-electrode active material layer 22 of the laminated polar plate 41 and the collector 21. In the description of the present manufacturing method, the insulating layer 23 is an example of a second insulating layer, and the collector 21 is an example of a second collector.

The collector 21 on which the insulating layer 23 has been formed is formed by laminating the insulating layer 23 on an upper surface of the collector 21 in a manner that is similar to that in which the aforementioned collector 11 on which the insulating layer 13 has been formed is formed. The shape of the insulating layer 23 in this case is narrower in width than the shape of the insulating layer 13, for example, in a pattern that is similar to that of the insulating layer 13 shown in Fig. 6A, 6B, or 6C. That is, the insulating layer 23 is laminated such that the area of the insulating layer 23 is smaller than the area of the insulating layer 13 in plan view. In this way, the insulating layer 23 is formed on top of the collector 21 in conformance with the pattern of the insulating layer 13 formed on the collector 11. Then, the collector 21 on which the insulating layer 23 has been formed is laminated on the laminated polar plate 41 such that the insulating layer 13 and the insulating layer 23 are positioned to overlap each other in plan view. For example, the collector 21 on which the insulating layer 23 has been formed is laminated on the laminated polar plate 41 such that a portion of the insulating layer 23 that is in a region in which the battery 50 is finally formed wholly overlaps the insulating layer 13.

Next, in the cutting step, a laminated combination, formed in the collector laminating step, of the laminated polar plate 41, 41a, or 41b and the collector 21 on which the insulating layer 23 has been formed is cut in the laminating direction at a position where the insulating layer 13 and the insulating layer 23 are divided (step S18 of Fig. 5). The laminated combination of the laminated polar plate 41, 41a, or 41b and the collector 21 on which the insulating layer 23 has been formed is rephrased as a laminated combination of the collector 11 and the insulating layer 13, the power-generating element 40, the insulating layer 23, and the collector 21. As shown in Fig. 8, the laminated combination of the laminated polar plate 41, 41a, or 41b and the collector 21 on which the insulating layer 23 has been formed is cut with a blade, laser light, or other devices, for example, at the positions of dashed lines C1, C2, C3, and C4 where the insulating layer 13 and the insulating layer 23 are disposed. At the positions of the dashed lines C1, C2, C3, and C4, the collector 11, the insulating layer 13, the electrode active material layer 12, the solid electrolyte layer 30, the counter-electrode active material layer 22, the insulating layer 23, and the collector 21 are laminated in this order, and they are cut all at once. This makes it unnecessary to laminate the layers of the power-generating element 40 in shapes into which they have been cut, thus making it possible to easily manufacture batteries 50. For example, in a case where the insulating layer 13 is laminated in a grating shape or a striped shape in plan view, such as that show in Fig. 6A, 6B, or 6C, having an elongated portion, the laminated combination of the laminated polar plate and the collector 21 on which the insulating layer 23 has been formed is cut along a direction parallel with the length of the grating shape or the striped shape of the insulating layer 13. This gives batteries 50 having the insulating layers 13 and 23 located at all ends facing cut surfaces of the batteries 50 thus manufactured.

Alternatively, in the collector laminating step, the insulating layer 23 may be laminated in such a position on an upper surface of the counter-electrode active material layer 22 of the laminated polar plate 41 as to overlap the insulating layer 13 in plan view, and the collector 21 may be further laminated on top of the insulating layer 23. In this case, the cutting step is executed after the collector 21 has been laminated on the laminated combination of the laminated polar plate 41 and the insulating layer 23.

Thus, the method for manufacturing a battery 50 includes the cutting step of cutting along a position where the collector 11, the insulating layer 13, the electrode active material layer 12, the solid electrolyte layer 30, the counter-electrode active material layer 22, the insulating layer 23, and the collector 21 are laminated. This causes the respective side surfaces of the collector 11, the insulating layer 13, the electrode active material layer 12, the solid electrolyte layer 30, and the counter-electrode active material layer 22, the insulating layer 23, and the collector 21 to be exposed at ends in directions perpendicular to the laminating direction. It should be noted that the side surfaces exposed after cutting may be protected by a sealing member or other members that cover the side surfaces. That is, in a case where the side surfaces are covered with another member such as the sealing member, the exposed side surfaces may be covered with the member.

By thus including the cutting step of cutting along the position where the collector 11, the insulating layer 13, the electrode active material layer 12, the solid electrolyte layer 30, the counter-electrode active material layer 22, the insulating layer 23, and the collector 21 are laminated, ends of the collector 11, the insulating layer 13, the electrode active material layer 12, the solid electrolyte layer 30, the counter-electrode active material layer 22, the insulating layer 23, and the collector 21 in directions perpendicular to the laminating direction are exposed.

### (4) Effects

As noted above, the method for manufacturing a battery 50 according to the present embodiment includes an insulating layer laminating step, a power-generating element laminating step, a collector laminating step, and a cutting step. In the insulating layer laminating step, an insulating layer 13 is laminated on a portion of at least one surface of a collector 11. In the power-generating element laminating step, a power-generating element 40 obtained by laminating an electrode active material layer 12, a solid electrolyte layer 30, and a counter-electrode active material layer 22 in this order and the collector 11 on which the insulating layer 13 has been formed are laminated such that the electrode active material layer 12 covers the insulating layer 13. In the collector laminating step, a collector 21 on which an insulating layer 23 has been formed is laminated on a laminated polar plate 41 formed by the power-generating element 40 being laminated on the collector 11. In the cutting step, a laminated combination of the laminated polar plate 41 and the collector 21 on which the insulating layer 23 has been formed is cut in a laminating direction at a position where the insulating layer 13 and the insulating layer 23 are divided.

In this way, the laminated combination of the laminated polar plate 41 and the collector 21 on which the insulating layer 23 has been formed is cut in the laminating direction at the position where the insulating layer 13 and the insulating layer 23 are divided. This makes it unnecessary to laminate the layers of the power-generating element 40 in shapes into which they have been cut, thus making it possible to easily manufacture the battery 50.

Further, since the laminated combination of the laminated polar plate 41 and the collector 21 on which the insulating layer 23 has been formed is cut in the laminating direction at the position where the insulating layer 13 and the insulating layer 23 are divided, the battery 50 is manufactured with the insulating layer 13 laminated at ends of the collector 11 in plan view and with the insulating layer 23 laminated at ends of the collector 21 in plan view. Furthermore, since the electrode active material layer 12 is laminated so as to cover the insulating layer 13 laminated on the collector 11 and the counter-electrode active material layer 22 is laminated so as to cover the insulating layer 23 laminated on the collector 21, the collector 11, the insulating layer 13, and the electrode active material layer 12 are laminated in this order at the ends of the collector 11 of the battery 50 thus manufactured and the collector 21, the insulating layer 23, and the counter-electrode active material layer 22 are laminated in this order at the ends of the collector 21 of the battery 50 thus manufactured. Therefore, even if the collector 11 and the collector 21 delaminate at the ends of the collector 11 and the collector 21, at which delaminate tends to occur, exposure of the electrode active material layer 12 and the counter-electrode active material layer 22 is reduced, as the insulating layer 13 and the insulating layer 23 are exposed. This results in making it hard for damage, a short circuit, or other failures to occur due to contact between the electrode active material layer 12 and another member or between the counter-electrode active material layer 22 and another member. This makes it possible to manufacture a highly-reliable battery 50.

Further, the dimensions of the insulating layer 13 and the insulating layer 23 can be determined simply by adjusting cutting position. Therefore, although the presence of the insulating layer 13 and the insulating layer 23 results in the formation of regions in which the electrode active material layer 12 and the counter-electrode active material layer 22 hardly function as electrodes, these region can be minimized by adjusting the dimensions of the insulating layer 13 and the insulating layer 23. This makes it possible to easily manufacture a battery 50 with a high volume energy density.

Further, in a case where the electrode active material layer 12 is a positive-electrode active material layer and the counter-electrode active material layer 22 is a negative-electrode active material layer, the width of the insulating layer 13 is greater than the width of the insulating layer 23, so that as mentioned above, the positive-electrode active material layer is narrower in substantive area (area that functions as an electrode) than the negative-electrode active material layer and the region that functions as an electrode is positioned within the negative-electrode active material layer in plan view. This results in suppression of deposition of metal on the negative-electrode active material layer as mentioned above. This brings about further improvement in reliability of the battery 50 to be manufactured.

Further, by being cut in the laminating direction, the laminated combination of the laminated polar plate 41 and the collector 21 on which the insulating layer 23 has been formed is cut to give a battery 50 with the insulating layer 13 laminated at the ends of the collector 11 and with the insulating layer 23 laminated at the ends of the collector 21. This makes it unnecessary to separately laminate the positive-electrode active material layer and the negative-electrode active material layer for each single cell with the positive-electrode active material layer and the negative-electrode active material layer shaped with a substantive difference in area, thus making it possible to easily manufacture batteries 50 with high production efficiency.

In the absence of the insulating layer 13 and the insulating layer 23, the electrode active material layer 12 is laminated at the ends of the collector 11, and the counter-electrode active material layer 22 is laminated at the ends of the collector 21. Therefore, even when a laminated body obtained by laminating the power-generating element 40 and the collector 21 is cut, exposure of the electrode active material layer 12 and the counter-electrode active material layer 22 cannot be reduced when the ends of the collectors 11 and 22 delaminate. Furthermore, a battery is manufactured in which there is no substantive difference in area between the electrode active material layer 12 and the counter-electrode active material layer 22. Therefore, although a battery can be easily manufactured, such a battery is low in reliability, and it is hard to employ such a manufacturing method. On the other hand, in the manufacturing method according to the present embodiment, as mentioned above, the laminated combination of the laminated polar plate 41 and the collector 21 on which the insulating layer 23 has been formed is cut at the position where the insulating layer 13 and the insulating layer 23 are divided. This makes it possible to, in addition to easily manufacturing a battery by cutting the laminated combination of the laminated polar plate 41 and the collector 21 on which the insulating layer 23 has been formed, reduce exposure of the electrode active material layer 12 and the counter-electrode active material layer 22, reduce the area of the electrode active material layer 12 that functions as an electrode, and adjust the areas of the insulating layer 13 and the insulating layer 23. Such a combination of the collector laminating step of laminating, on the laminated polar plate 41, the collector 21 on which the insulating layer 23 has been formed and the cutting step of cutting, at the position where the insulating layer 13 and the insulating layer 23 are divided, the laminated combination of the laminated polar plate 41 and the collector 21 on which the insulating layer 23 has been formed makes it possible to easily manufacture a highly-reliable battery with a high volume energy density.

### (5) Other Manufacturing Methods

The method for manufacturing a battery according to the present embodiment is not limited to the aforementioned example but may for example be the following manufacturing method.

First, a collector 11 having a shape shown in Figs. 1 and 2 is prepared. Then, an application process or other processes are used to laminate an insulating layer 13 on top of the collector 11 in a shape shown in Figs. 1 and 2. An electrode active material layer 12 and a solid electrolyte layer 30 are laminated by layered coating in this order on top of each other all over the laminated combination of the collector 11 and the insulating layer 13, whereby an electrode plate is obtained.

Next, a collector 21 having a shape shown in Figs. 1 and 2 is prepared. Then, an application process or other processes are used to laminate an insulating layer 23 on top of the collector 21 in a shape shown in Figs. 1 and 2. A counter-electrode active material layer 22 and a solid electrolyte layer 30 are laminated by layered coating in this order on top of each other all over the laminated combination of the collector 21 and the insulating layer 23, whereby a counter-electrode plate is obtained.

Next, the electrode plate thus obtained and the counter-electrode plate thus obtained are laminated such that their respective solid electrolyte layers 30 make contact with each other. The laminated body thus laminated is pressed from both sides in the laminating direction by using a flat-plate press, whereby a battery 50 is obtained.

Alternatively, a battery 50 may be formed by forming a laminated body by laminating an insulating layer 13, an insulating layer 23, and a power-generating element 40 on a substrate that is separate from a collector, cutting the laminated body in the laminating direction at a position where the insulating layer 13 and the insulating layer 23 are divided, if necessary, and then causes the laminated body thus obtained to be sandwiched between a collector 11 and a collector 21.

### [Modification 1]

The following describes Modification 1 of Embodiment 1. The following describes Modification 1 of Embodiment 1 with a focus on differences from Embodiment 1, and omits or simplifies a description of common features.

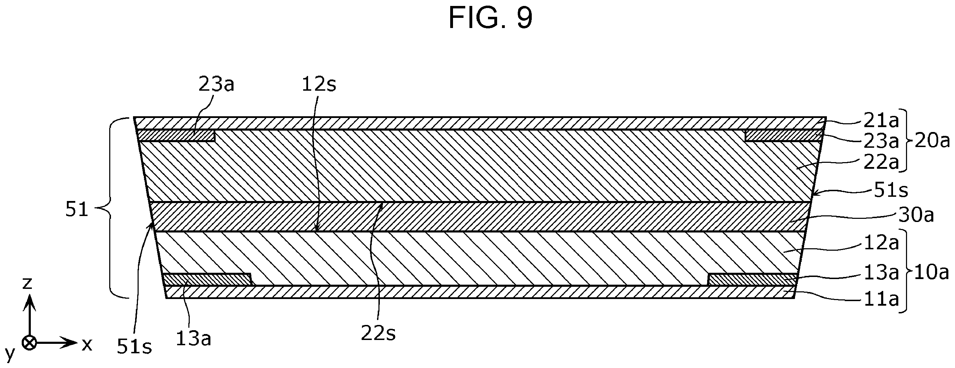

Fig. 9 is a schematic cross-sectional view showing an example of a battery according to the present modification. As shown in Fig. 9, the battery 51 differs from the battery 50 of Embodiment 1 in that the battery 51 has side surfaces inclined with respect to the laminating direction.

The battery 51 includes an electrode layer 10a, a counter-electrode layer 20a placed opposite to the electrode layer 10a, and a solid electrolyte layer 30a located between the electrode layer 10a and the counter-electrode layer 20a.

The electrode layer 10a includes a collector 1 1a, an electrode active material layer 12a located between the collector 11a and the solid electrolyte layer 30a, and an insulating layer 13a located between the collector 11a and the electrode active material layer 12a at ends of the electrode layer 10a. The counter-electrode layer 20a includes a collector 21a, a counter-electrode active material layer 22a located between the collector 21a and the solid electrolyte layer 30a, and an insulating layer 23a located between the collector 21a and the counter-electrode active material layer 22a at ends of the counter-electrode layer 20a.

A side surface 51s connecting two principal surfaces of the battery 51 that are perpendicular to the laminating direction is inclined in such a direction with respect to the laminating direction that the area of the counter-electrode layer 20a is larger than the area of the electrode layer 10a in plan view. In other words, the side surface 51s is inclined in such a direction with respect to the laminating direction that the width of the counter-electrode layer 20a is larger than the width of the electrode layer 10a in a cross-section obtained by cutting the battery 51 in the laminating direction. That is, in the battery 51, the area of a principal surface 22s of the counter-electrode active material layer 22a that faces the electrode active material layer 12a is larger than the area of a principal surface 12s of the electrode active material layer 12a that faces the counter-electrode active material layer 22s. Further, when seen from an angle parallel with the laminating direction, the principal surface 12s is located within the principal surface 22s. Further, in the battery 51, for example, the electrode layer 10a, which includes the electrode active material layer 12a, is a positive-electrode layer including a positive-electrode active material layer, and the counter-electrode layer 20a, which includes the counter-electrode active material layer 22a, is a negative-electrode layer including a negative-electrode active material layer. In this case, deposition of metal is suppressed in the battery 51, as the area of the negative-electrode active material layer is larger than the area of the positive-electrode active material layer in plan view.

Further, since, on the side surface 51s, a side surface of the solid electrolyte layer 30a too is inclined with respect to the laminating direction, the exposed surface of the solid electrolyte layer 30a is large, so that the distance between the electrode active material layer 12a and the counter-electrode active material layer 22a on the side surface 51s is long. This makes it hard for the electrode active material layer 12a and the counter-electrode active material layer 22a to make contact with each other, reducing the risk of a short circuit.

Further, all side surfaces 51s of the battery 51 including side surfaces 51s that are not illustrated are inclined with respect to the laminating direction, so that the area of the principal surface 22s is larger than the area of the principal surface 12s. It should be noted that all side surfaces 51s of the battery 51 do not need to be inclined with respect to the laminating direction, but at least one side surface 51s needs only be inclined with respect to the laminating direction.

The battery 51 is manufactured, for example, by cutting a battery 50 according to Embodiment 1 in a direction inclined with respect to the laminating direction. Further, the battery 51 may also be manufactured by being cut in a direction inclined with respect to the laminating direction in the cutting step of the method for manufacturing a battery 50. That is, the side surface 51s may be a cut surface. The shape of the cut surface of the battery 51 is a trapezoid.

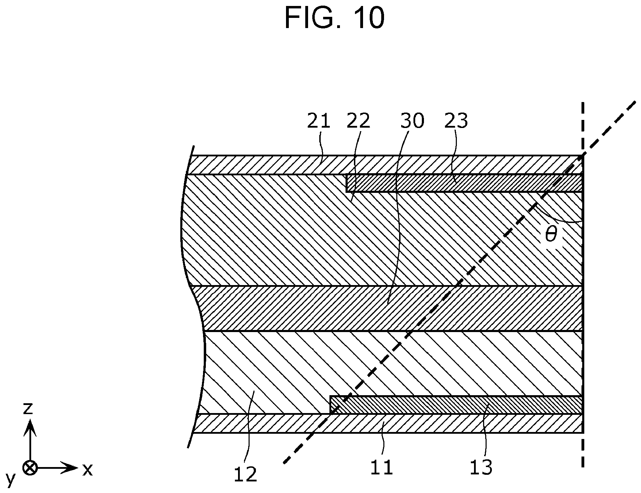

Fig. 10 is a diagram for explaining a cutting step of a method for manufacturing a battery according to the present modification. As shown in Fig. 10, the battery 51 is manufactured by being cut in a direction inclined at an angle θ with respect to the laminating direction in the aforementioned cutting step. The angle θ needs only be determined, for example, from the width of the insulating layer and the intended battery characteristics. The angle θ is for example smaller than 45 degrees. The angle θ may be smaller than or equal to 30 degrees. In a case where the angle θ is zero degree, the battery 50 is manufactured. For example, if the angle of a cut surface is larger than 45 degrees in a case where the thickness of a battery is 0.1 mm and the width of an insulating layer 13 from a side surface of the battery is 0.1 mm, the insulating layer 13 is removed by cutting, with the result that an effect of the insulating layer 13 is not brought about.

### [Modification 2]

The following describes Modification 2 of Embodiment 1. The following describes Modification 2 of Embodiment 1 with a focus on differences from Embodiment 1, and omits or simplifies a description of common features.

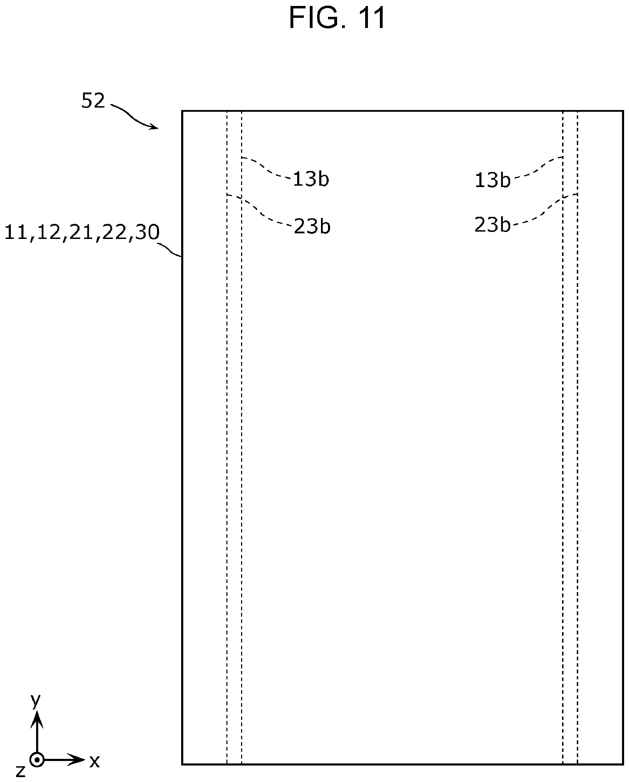

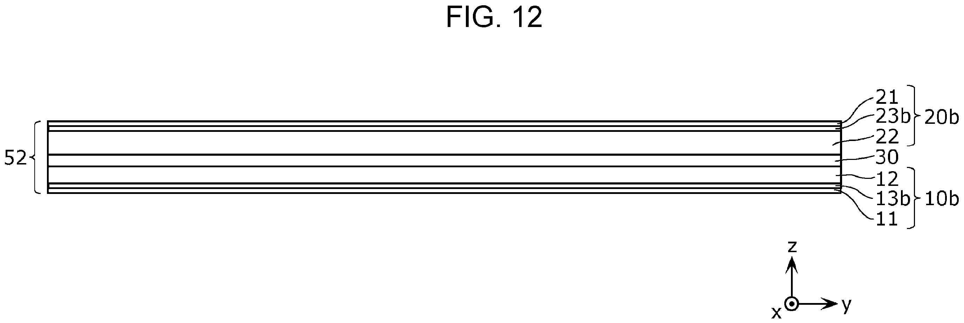

Fig. 11 is a schematic top view showing an example of a battery according to the present modification. In Fig. 11, the planimetric shapes of constituent elements of the battery are indicated by solid lines and dashed lines. Fig. 12 is a schematic side view showing an example of a battery according to the present modification. Fig. 12 is a plan view in which a side surface of a battery 52 along the length of the battery 52 is viewed from the front. As shown in Figs. 11 and 12, the battery 52 differs from the battery 50 according to Embodiment 1 in that the insulating layers are formed in stripes.

Instead of including the insulating layers 13 and 23 of the battery 50, the battery 52 includes insulating layers 13b and 23b that are different in planimetric shape from the insulating layers 13 and 23. The battery 52 includes an electrode layer 10b, a counter-electrode layer 20b placed opposite to the electrode layer 10b, and a solid electrolyte layer 30 located between the electrode layer 10b and the counter-electrode layer 20b. The electrode layer 10b includes a collector 11, an electrode active material layer 12 located between the collector 11 and the solid electrolyte layer 30, and an insulating layer 13b located between the collector 11 and the electrode active material layer 12 at ends of the electrode layer 10b. The counter-electrode layer 20b includes a collector 21, a counter-electrode active material layer 22 located between the collector 21 and the solid electrolyte layer 30, and an insulating layer 23b located between the collector 21 and the counter-electrode active material layer 22 at ends of the counter-electrode layer 20b.

As shown in Figs. 11 and 12, the insulating layer 13b and the insulating layer 23b are each disposed along two opposite sides of a rectangle that is the planimetric shape of the battery 52. That is, the insulating layer 13b and the insulating layer 23b are in the shape of two stripes extending in one direction (that, in the example shown in Fig. 11, is a y direction parallel with the length of the battery 52 in plan view). The insulating layer 13b and the insulating layer 23b are each not formed along two other opposite sides orthogonal to the two opposite sides of the rectangle.

Thus, such formation of the insulating layers 13b and 23b in striped shapes extending in one direction makes it only necessary to move a coating nozzle or the collectors 11 and 21 or other members only in one direction in forming the insulating layer 13b and the insulating layer 23b by coating or other processes, making it possible to efficiently manufacture the battery 52.

Instead of being disposed along two opposite sides extending in a direction parallel with the length of the rectangle of the battery 52 in plan view, the insulating layer 13b and the insulating layer 23b may each be disposed along two opposite sides extending in a direction parallel with a short side of the rectangle.

### [Modification 3]

The following describes Modification 3 of Embodiment 1. The following describes Modification 3 of Embodiment 1 with a focus on differences from Embodiment 1, and omits or simplifies a description of common features.

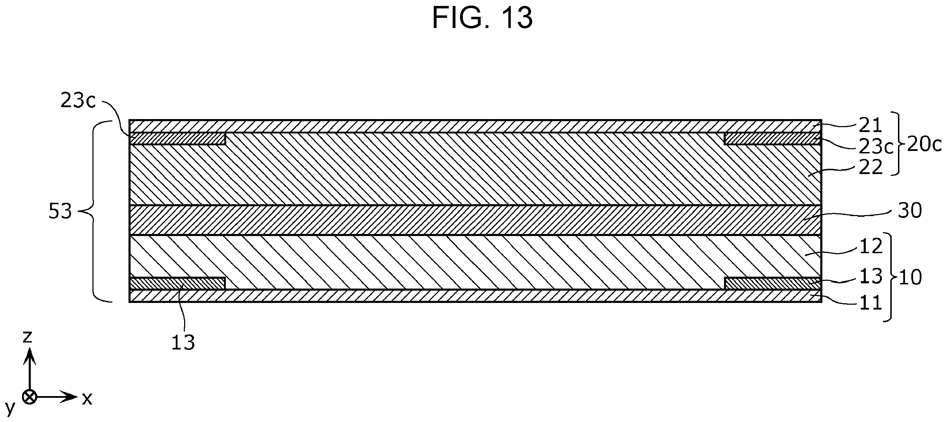

Fig. 13 is a schematic cross-sectional view showing an example of a battery according to the present modification. As shown in Fig. 13, a battery 53 differs from the battery 50 according to Embodiment 1 in that the width of an electrode-side insulating layer and the width of a counter-electrode-side insulating layer are equal.

Instead of including the insulating layer 23 of the battery 50, the battery 53 includes an insulating layer 23c that is different in width from the insulating layer 23. The battery 53 includes an electrode layer 10, a counter-electrode layer 20c placed opposite to the electrode layer 10, and a solid electrolyte layer 30 located between the electrode layer 10 and the counter-electrode layer 20c. The counter-electrode layer 20c includes a collector 21, a counter-electrode active material layer 22 located between the collector 21 and the solid electrolyte layer 30, and an insulating layer 23c located between the collector 21 and the counter-electrode active material layer 22 at ends of the counter-electrode layer 20c.

In the battery 53, in a plan view, the length of the insulating layer 13 from the outer periphery to the center of the battery 53 is equal to that of the insulating layer 23c from the outer periphery to the center of the battery 53. In a plan view, a region in which the insulating layer 13 is formed is equal to a region in which the insulating layer 23c is formed. Thus, the battery 53 can be easily formed, as the insulating layer 13 and the insulating layer 23c can be formed in the same shape on top of the collector 11 and on top of the collector 21, respectively.

### (Embodiment 2)

Next, Embodiment 2 is described. Embodiment 2 describes a laminated battery in which single cells such as batteries according to Embodiment 1 are laminated. The following gives a description with a focus on differences from Example 1 described above, and omits or simplifies a description of common features.

### [Configuration]

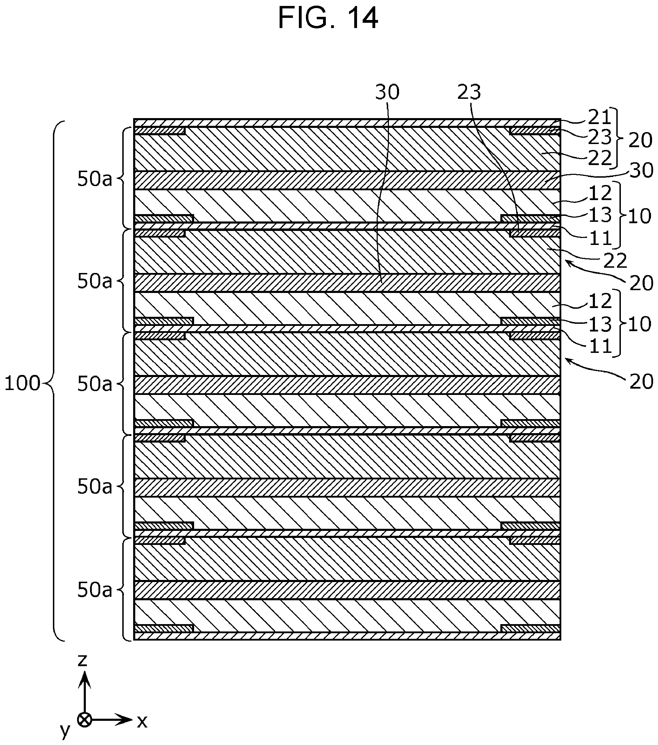

First, a configuration of a laminated battery according to Embodiment 2 is described with reference to the drawings. Fig. 14 is a schematic cross-sectional view showing an example of a laminated battery according to the present embodiment. As shown in Fig. 14, a laminated battery 100 has a structure in which single cells that are similar in structure of the battery 50 according to Embodiment 1 are laminated. That is, the laminated battery 100 is a laminated battery in which a plurality of single cells are laminated.

The laminated battery 100 includes a plurality of batteries 50a. The top battery 50a is similar in configuration to the battery 50. Further, each of the second top and subsequent batteries 50 shares the collector of the counter-electrode layer 20 with the collector 11 of the next battery 50a above the battery 50a. For example, the collector 11 of the top battery 50a serves as both a collector in the electrode layer 10 of the top battery 50a and a collector in the counter-electrode layer of the second top battery 50a. In the present embodiment, the collector 11 is also an example of a counter-electrode collector. In each of the second top and subsequent batteries 50, the insulating layer 23 is located between the counter-electrode active material layer 22 and the collector 11, and a side surface of the insulating layer 23 and a side surface of the collector 11 are flush with each other.

In the laminated battery 100, the plurality of batteries 50a are laminated such that the electrode layer 10 of a first one of adjacent batteries 50a and the counter-electrode layer 20 of a second one of the adjacent batteries 50a face each other, i.e. are adjacent to each other. This makes a structure in which the function of the collector 11 is shared by the adjacent batteries 50a. By being thus laminated, the laminated battery 100 serves as a series-laminated battery. This makes it possible to achieve a series-laminated high-voltage laminated battery 100 that exhibits an effect similar to that of the battery 50 according to Embodiment 1.

In the example shown in Fig. 14, the number of batteries 50a that are laminated is 5, but may be larger than or equal to 2 and smaller than or equal to 4 or may be larger than or equal to 6.

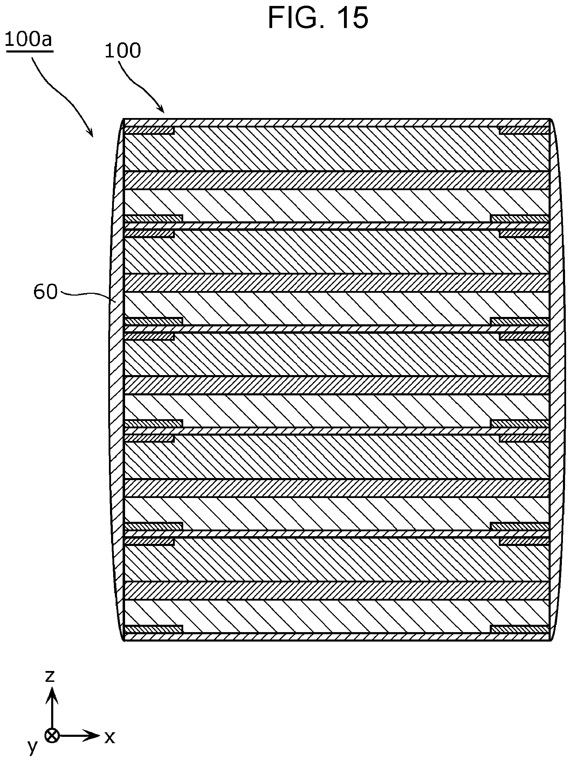

A side surface of the laminated battery 100 is for example a cut surface. Further, the side surface of the laminated battery 100 is a flat surface. In other words, side surfaces of the plurality of batteries 50a are flush with one another. On the side surface of the laminated battery 100, the layers may be exposed, and a sealing member or other members may be provided on exposed side surfaces. Fig. 15 is a schematic cross-sectional view showing another example of a laminated battery according to the present embodiment. As shown in Fig. 15, a laminated battery 100a has a structure in which the side surface of the laminated battery 100, e.g. all side surfaces, is covered with a sealing member 60. That is, the laminated battery 100a includes the laminated battery 100 and the sealing member 60, and the side surfaces of layers constituting the laminated battery 100 are covered with the sealing member 60. This prevents the side surfaces of the layers of the laminated battery 100a from being exposed directly to the outside, thus bringing about increase in strength of the laminated battery 100a and improvement in reliability of the laminated battery 100a. Further, the protection of the laminated battery 100a with the sealing member 60 allows the laminated battery 100a to be not only used in a metal case or an aluminum laminate film but also used, for example, as an electronic component that is mounted on a substrate.

The sealing member 60 is in contact with the side surface of the laminated battery 100. The sealing member 60 of the laminated battery 100a is formed by placing the laminated battery 100 such that the side surface of the laminated battery 100 faces upward and applying a sealing member to the side surface from above with a dispenser or other devices. As a material of the sealing member 60, a material of a sealing member for use in a publicly-known battery of thermosetting resin or other materials (e.g. a lithium-ion all-solid-state battery) may be used. Such a material of a sealing member can impart, for example, functions such as water resistance and impact resistance. Further, the sealing member 60 may be composed of a plurality of sealing members in layers. In this case, the plurality of layers may be made from the same material, or may be made from different materials.

### [Manufacturing Method]

The following describes a method for manufacturing a laminated battery according to the present embodiment. It should be noted that the following method for manufacturing a laminated battery 100 is just an example, and the method for manufacturing a laminated battery 100 is not limited to the following example.

As is the case with the method for manufacturing a battery 50, the method for manufacturing a laminated battery 100 includes an insulating layer laminating step, a power-generating element laminating step, a collector laminating step, and a cutting step. The method for manufacturing a laminated battery 100 is also called a method for manufacturing a battery including a plurality of power-generating elements 40, as the laminated battery 100 is a battery including a plurality of power-generating elements 40. The following describes each of the steps in detail.

### (1) Insulating Layer Laminating Step

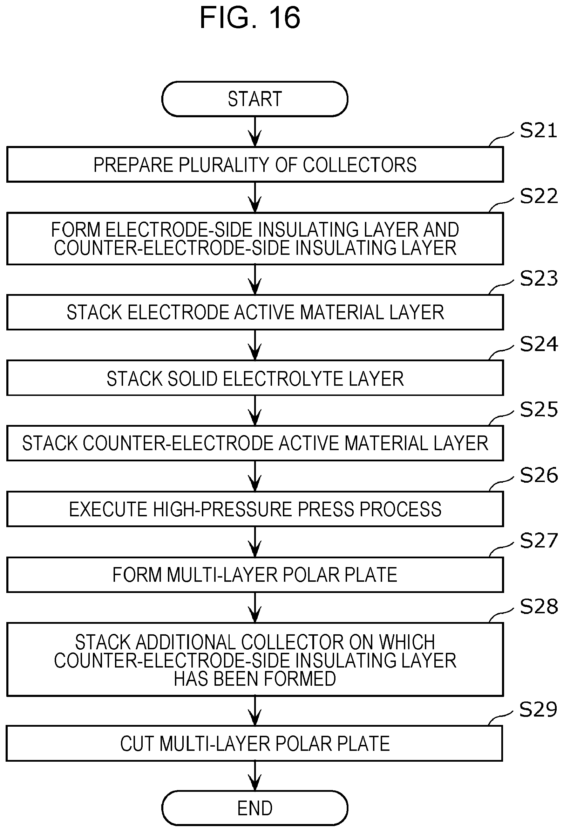

First, the insulating layer laminating step is described. Fig. 16 is a flow chart for explaining a method for manufacturing a laminated battery according to the present embodiment.

In the insulating layer laminating step, first, a plurality of collectors 11 are prepared (step S21 of Fig. 16). Then, an insulating layer 13 is formed on one surface of each of the plurality of collectors 11 thus laminated, and an insulating layer 23 is formed on the other surface (step S22 of Fig. 16). In the formation of the insulating layer 13 and the insulating layer 23, the insulating layer 13 and the insulating layer 23 are laminated on the collector 11 by using a method that is similar to the aforementioned step S12. In the formation of the insulating layer 13 and the insulating layer 23, for example, the insulating layer 13 and the insulating layer 23 are formed in the same pattern in positions overlapping each other in plan view. Further, the insulating layer 13 and the insulating layer 23 are formed such that the width of the insulating layer 13 is greater than the width of the insulating layer 23 in plan view. That is, the insulating layer 13 and the insulating layer 23 are formed such that the area of the insulating layer 13 is greater than the area of the insulating layer 23 in plan view. Further, for example, the insulating layer 13 and the insulating layer 23 are formed such that a portion of the insulating layer 23 that is in a region in which the laminated battery 100 is finally formed wholly overlaps the insulating layer 13 in plan view.

### (2) Power-generating Element Laminating Step

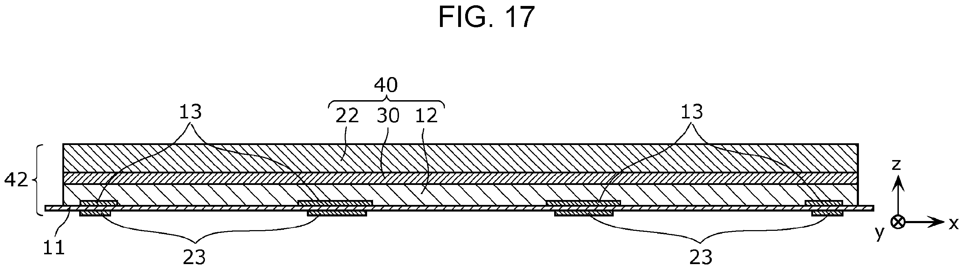

Next, the power-generating element laminating step is described. In the manufacturing method according to the present embodiment, the power-generating element laminating step includes a first laminated body forming step and a first laminated body laminating step. In the first laminated body forming step, a plurality of laminated polar plates are formed by laminating a power-generating element 40 on a laminated combination of each of the plurality of collectors 11 and the insulating layers 13 and 23 such that the electrode active material layer 12 covers the insulating layer 13. Fig. 17 is a schematic cross-sectional view showing an example of a laminated polar plate according to the present embodiment. As shown in Fig. 17, an electrode active material layer 12, a solid electrolyte layer 30, and a counter-electrode active material layer 22 are laminated in this order on top of each other over a laminated combination of each of the plurality of collectors 11 and the insulating layers 13 and 23 (steps S23, S24, and S25 of Fig. 16). In so doing, the electrode active material layer 12 is laminated on a surface of the collector 11 on which the insulating layer 13 is formed. This causes a laminated polar plate 42 to be formed. Furthermore, if necessary, a high-pressure press process is performed on each of the electrode active material layer 12, the solid electrolyte layer 30, and the counter-electrode active material layer 22, which were laminated in steps S23, S24, and S25 (step S26 of Fig. 16). Further, if necessary, a heat treatment is performed on each of the electrode active material layer 12, the solid electrolyte layer 30, and the counter-electrode active material layer 22, which were laminated in steps S23, S24, and S25. Steps S23, S24, S25, and S26 may involve the use of methods which are similar to those used in the aforementioned steps S13, S14, S15, and S16.

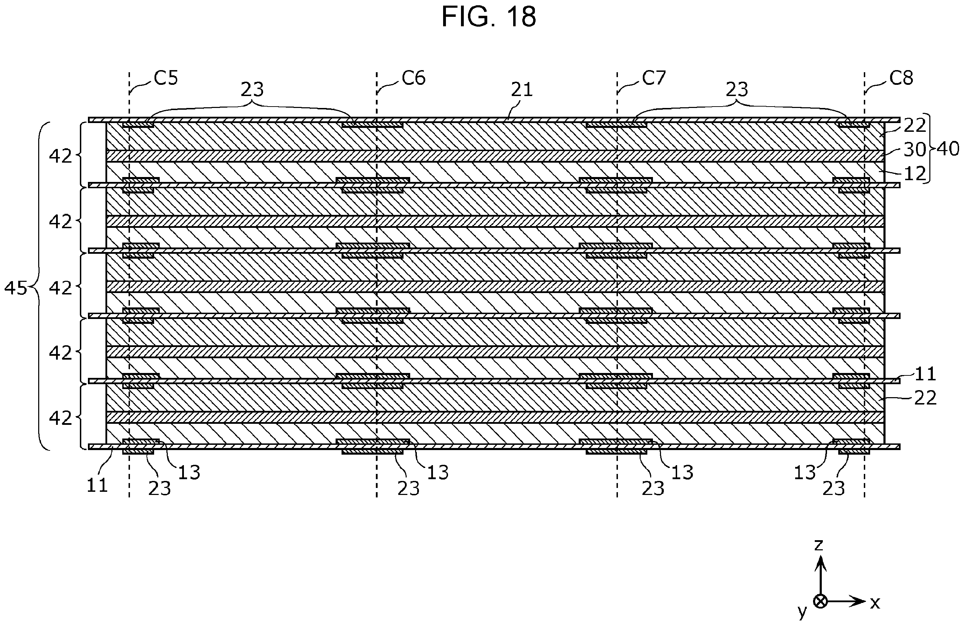

Next, in the first laminated body laminating step, the plurality of laminated polar plates 42 formed in the first laminated body forming step are laminated such that there is an overlap in position between the insulating layer 13 of each of the laminated polar plates 42 and the insulating layer 13 of another of the laminated polar plates 42 in plan view, whereby a multi-layer polar plate is formed (step S27 of Fig. 16). Fig. 18 is a diagram for explaining a first laminated body laminating step and subsequent steps of a method for manufacturing a laminated battery according to the present embodiment. As shown in Fig. 18, a multi-layer polar plate 45 in which a plurality of laminated polar plates 42 are laminated is formed in the first laminated body laminating step. As shown in Fig. 18, in the first laminated body laminating step, the plurality of laminated polar plates 42 are laminated such that the counter-electrode active material layer 22 of a first one of adjacent laminated polar plates 42 faces the collector 11 of a second one of the adjacent laminated polar plates 42. That is, the plurality of laminated polar plates 42 are laminated such that the insulating layer 23 laminated on the collector 11 of the second one of the adjacent laminated polar plates 42 is sandwiched between the counter-electrode active material layer 22 of the first one of the adjacent laminated polar plates 42 and the collector 11 of the second one of the adjacent laminated polar plates 42. Then, for example, by performing a press process for pressing, from both sides in the laminating direction, the plurality of laminated polar plates 42 thus laminated, the plurality of laminated polar plates 42 are bonded to one another to form the multi-layer polar plate 45. In the multi-layer polar plate 45, the collector 11 of an upper one of adjacent laminated polar plates 42 and the counter-electrode active material layer 22 of a lower one of the adjacent laminated plates 42 are in contact with each other. Further, the insulating layer 23 of the upper one of the adjacent laminated polar plates 42 is located between the collector 11 of the upper one of the adjacent laminated polar plates 42 and the counter-electrode active material layer 22 of the lower one of the adjacent laminated plates 42.

In a case where the electrode active material layers 12, the solid electrolyte layers 30, and the counter-electrode active material layers 22 have been subjected to a high-pressure press process in forming the laminated polar plates 42, a high-pressure press is not needed in a press process in forming the multi-layer polar plate 45. For example, the pressure of the press process for bonding the laminated polar plates 42 to one another in step S27 is lower than the pressure of the high-pressure press process in step S26. This makes it possible to form the multi-layer polar plate 45 without fracturing interfaces formed in the first laminated body forming step.

### (3) Collector Laminating Step and Cutting Step

Next, the collector laminating step and the cutting step are described. In the collector laminating step, an additional collector on which a counter-electrode-side insulating layer has been formed is laminated on a multi-layer polar plate (step S28 of Fig. 16). For example, as shown in Fig. 18, a collector 21 on which an insulating layer 23 has been formed is laminated on a surface of the power-generating element 40 of an uppermost one (i.e. a laminated polar plate 42 on an upper surface of which no other laminated polar plate 42 is laminated) of the plurality of laminated polar plates 42 that faces away from the collector 11 in the multi-layer polar plate 45. In so doing, the collector 21 on which the insulating layer 23 has been formed is bonded by a press process or other processes to the exposed upper surface of the counter-electrode active material layer 22 of the uppermost laminated polar plate 42. The press process is performed, for example, at lower pressure than the high-pressure press process performed in step S26. Further, the collector 21 on which the insulating layer 23 has been formed is laminated on the laminated polar plate 42 such that the insulating layer 23 is sandwiched between the counter-electrode active material layer 22 of the uppermost laminated polar plate 42 and the collector 21.

The collector 21 on which the insulating layer 23 has been formed is formed, for example, by the method described in the aforementioned step S17. For example, the insulating layer 23 is formed on top of the collector 21 such that the insulating layer 23 has the same shape and position in plan view to the insulating layer 13 formed on the collector 11. Then, the collector 21 on which the insulating layer 23 has been formed is laminated on the multi-layer polar plate 45 such that the insulating layer 13 and the insulating layer 23 are positioned to overlap each other in plan view. For example, the collector 21 on which the insulating layer 23 has been formed is laminated on the multi-layer polar plate 45 such that a portion of the insulating layer 23 that is in a region in which the laminated battery 100 is finally formed wholly overlaps the insulating layer 13 in plan view.

Next, in the cutting step, a laminated combination, formed in the collector laminating step, of the multi-layer polar plate 45 and the collector 21 on which the insulating layer 23 has been formed is cut in the laminating direction at a position where the insulating layers 13 and the insulating layers 23 are divided (step S29 of Fig. 16). As shown in Fig. 18, the laminated combination of the multi-layer polar plate 45 and the collector 21 on which the insulating layer 23 has been formed is cut with a blade, laser light, or other devices, for example, at the positions of dashed lines C5, C6, C7, and C8 where the insulating layers 13 and the insulating layers 23 are disposed. This gives a laminated battery 100 shown in Fig. 14. Although an insulating layer 23 is formed on a lower surface of the lowermost collector 11 of the multi-layer polar plate 45 shown in Fig. 18, a laminated battery 100 may be made by removing the insulating layer 23, or the laminated battery 100 may be used with the insulating layer 23 left.

At the positions of the dashed lines C5, C6, C7, and C8, the plurality of laminated polar plates 42 are laminated, and they are cut all at once. Thus, cutting the plurality of laminated polar plates 42 all at once makes it unnecessary to manufacture and laminate single cells in shapes into which they have been cut, thus significantly reducing the number of times the power-generating elements 40 are laminated in the power-generating element laminating step. This makes it possible to efficiently manufacture a laminated battery 100.

Alternatively, prior to the collector laminating step, an insulating layer 23 may be formed in such a position on an upper surface of the counter-electrode active material layer 22 of the uppermost laminated polar plate 42 of the multi-layer polar plate 45 as to overlap the insulating layer 13 in plan view. In this case, the cutting step is executed after a collector 21 has been laminated on the multi-layer polar plate 45 on which the insulating layer 23 has been formed.

Thus, using the method for manufacturing a laminated battery according to the present embodiment makes it possible to manufacture a direct-laminated high-voltage laminated battery 100.

### [Modification 1]

The following describes Modification 1 of Embodiment 2. The following describes Modification 1 of Embodiment 2 with a focus on differences from Embodiments 1 and 2, and omits or simplifies a description of common features.

A method for manufacturing a laminated battery according to the present modification is described. The method for manufacturing a laminated battery according to the present modification differs from the method for manufacturing a laminated battery according to Embodiment 2 in that a parallel-laminated battery is manufactured from a laminated combination of a collector 11 and insulating layers 13 laminated on both surfaces, respectively, of the collector 11 and a laminated combination of a collector 21 and insulating layers 23 laminated on both surfaces, respectively of the collector 21.

First, in the insulating layer laminating step, insulating layers 13 are laminated on both surfaces, respectively, of a collector 11. The insulating layers 13 laminated on both surfaces have the same position in plan view. The method for laminating the insulating layers 13 on the collector 11 may involve the use of methods which are similar to those used in the aforementioned steps S11 and S12. For example, an insulating layer 13 is laminated on a surface of a laminated combination, such as that shown in Fig. 6A, 6B, and 6C, of a collector 11 and an insulating layer 13 on which an insulating layer 13 is not laminated.

Insulating layers 23 are laminated on both surfaces, respectively, of a collector 21. For example, the insulating layers 23 are formed on both surfaces, respectively, of the collector 21 in conformance with the shapes of the insulating layers 13 in a manner that is similar to that in which the insulating layers 13 are laminated on both surfaces, respectively, of the collector 11. The shapes of the insulating layers 23 in this case are narrower in width than the shapes of the insulating layers 13, for example, in a pattern that is similar to those of the insulating layers 13. That is, the insulating layers 23 are laminated such that the areas of the insulating layers 23 are smaller than the areas of the insulating layers 13 in plan view.

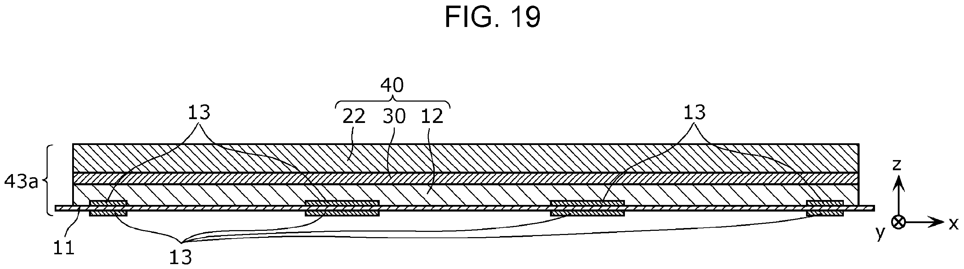

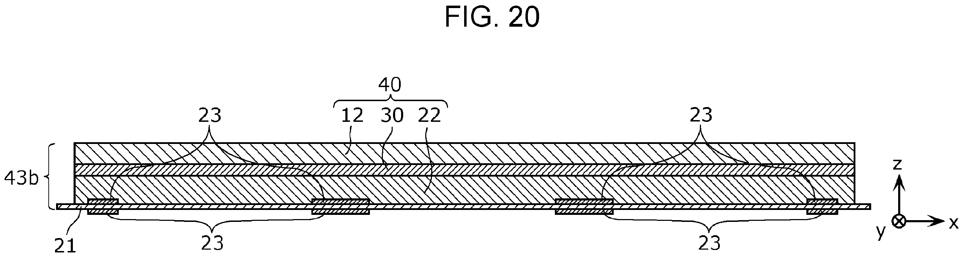

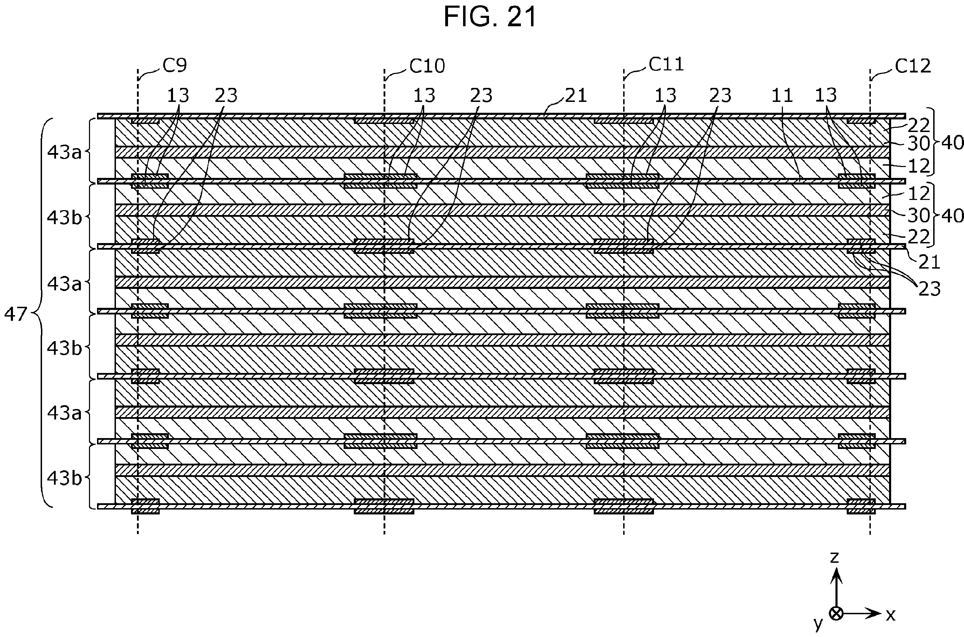

Next, the power-generating element laminating step is executed. Figs. 19 and 20 are each a schematic cross-sectional view showing an example of a laminated polar plate according to the present modification. Fig. 21 is a schematic cross-sectional view showing an example of a multi-layer polar plate according to the present modification. In the power-generating element laminating step according to the present modification, for example, a laminated polar plate 43a having an insulating layer 13 as shown in Fig. 19 and a laminated polar plate 43b having an insulating layer 23 as shown in Fig. 20 are formed.

First, as shown in Fig. 19, the laminated polar plate 43a is formed by overlaying an electrode active material layer 12, a solid electrolyte layer 30, and a counter-electrode active material layer 22 in this order over one surface of a collector 11 on both surfaces, respectively, of which insulating layers 13 are laminated. That is, a power-generating element 40 is laminated on one surface of a collector 11 on both surfaces, respectively, of which insulating layers 13 are laminated such that the electrode active material layer 12 of the power-generating element 40 covers an insulating layer 13. In the laminated polar plate 43a, a covering structure is formed in which the electrode active material layer 12 covers the insulating layer 13.

Further, as shown in Fig. 20, the laminated polar plate 43b is formed by overlaying a counter-electrode active material layer 22, a solid electrolyte layer 30, and am electrode active material layer 12 in this order over one surface of a collector 21 on both surfaces, respectively, of which insulating layers 23 are laminated. That is, a power-generating element 40 is laminated on one surface of a collector 21 on both surfaces, respectively, of which insulating layers 23 are laminated such that the counter-electrode active material layer 22 of the power-generating element 40 covers an insulating layer 23. In the laminated polar plate 43b, a covering structure is formed in which the counter-electrode active material layer 22 covers the insulating layer 23.

The laminating of the power-generating element 40 of each of the laminated polar plates 43a and 43b may involve the use of methods which are similar to those used in the aforementioned steps S13, S14, and S 15. Furthermore, if necessary, a high-pressure press process is performed on each of the electrode active material layer 12, the solid electrolyte layer 30, and the counter-electrode active material layer 22 thus laminated. Further, if necessary, a heat treatment is performed on each of the electrode active material layer 12, the solid electrolyte layer 30, and the counter-electrode active material layer 22 thus laminated.

Next, as shown in Fig. 21, a multi-layer polar plate 47 is formed by alternately laminating laminated polar plates 43a and 43b such that the electrode active material layer 12 of the power-generating element 40 of a laminated polar plate 43b covers an insulating layer 13 of a laminated polar plate 43a. Further, this causes the insulating layers 23 of laminated polar plates 43b other than the lowermost laminated polar plate 43b to be covered with the counter-electrode active material layers 22 of the power-generating elements 40 of the laminated polar plates 43a. In the formation of the multi-layer polar plate 47, the laminated polar plates 43a and 43b are alternately laminated such that the positions of the insulating layers 13 of each of the plurality of laminated polar plates 43a and the positions of the insulating layers 23 of each of the plurality of laminated polar plates 43b all overlap one another in plan view. Further, for example, the laminated polar plates 43a and 43b are alternately laminated such that portions of the insulating layers 23 that are in a region in which a laminated battery 102 is finally formed wholly overlap the insulating layers 13 in plan view. The laminated polar plates 43a and 43b thus laminated are pressed from both sides in the laminating direction by a press process, whereby the laminated polar plates 43a and 43b are bonded together to form the multi-layer polar plate 47.

The multi-layer polar plate 47 has a structure in which a laminated combination of a collector 11 and insulating layers 13 laminated on both surfaces, respectively, of the collector 11, two power-generating elements 40, and a laminated combination of a collector 21 and insulating layers 23 laminated on both surfaces, respectively, of the collector 21 are laminated. Further, the multi-layer polar plate 47 has a structure in which the collector 11 is sandwiched between the two power-generating elements 40 so as for the electrode active material layers 12 to cover the insulating layers 13 laminated on both surfaces, respectively, of the collector 11 and such that a first one of the two power-generating elements 40 is sandwiched between the laminated combination of the collector 11 and the insulating layers 13 laminated on both surfaces, respectively, of the collector 11 and the laminated combination of the collector 21 and the insulating layers 23 laminated on both surfaces, respectively, of the collector 21. As will be mentioned in detail later, a laminated combination of a collector 21 and an insulating layer 23 laminated on one surface of the collector 21 is laminated on a side of the two uppermost power-generating elements 40 that faces away from the collector 11.

Although, in the present modification, the multi-layer polar plate 47 has three sets of laminated polar plates 43a and 43b that are alternately laminated, the multi-layer polar plate 47 may be one or two sets or may have four or more sets.

Next, the collector laminating step is executed. In the collector laminating step, , a collector 21 on which an insulating layer 23 has been formed is laminated as an additional collector on a surface of a power-generating element 40 of the multi-layer polar plate 47 on which a collector 11 is not laminated. Specifically, as shown in Fig. 21, in the multi-layer polar plate 47, the collector 21 on which the insulating layer 23 has been formed is bonded by a press process or other processes to a surface of the power-generating element 40 of an uppermost one of the plurality of laminated polar plates 43a that faces away from the collector 11.

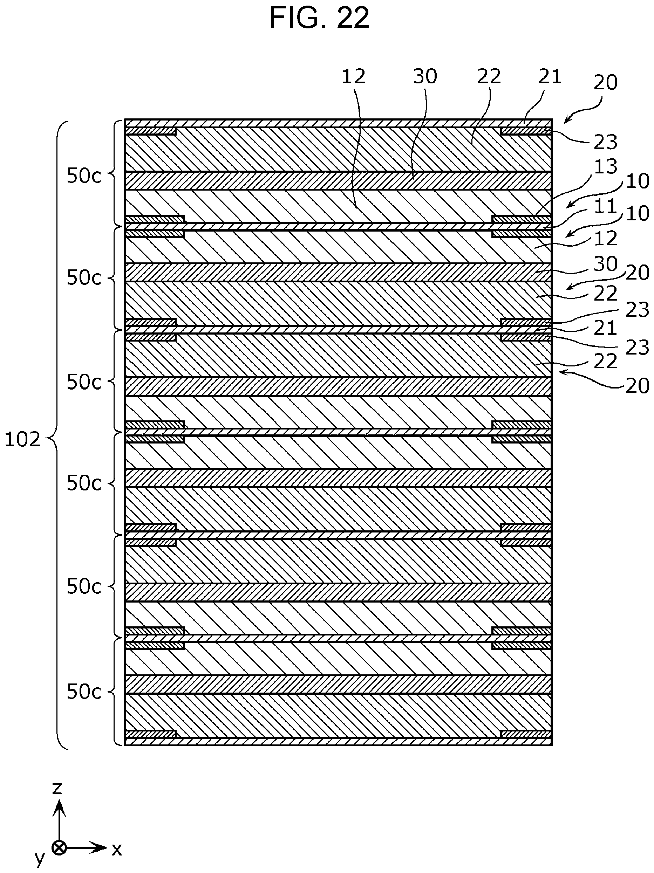

Next, the cutting step is executed. In the cutting step, a laminated combination, formed in the collector laminating step, of the multi-layer polar plate 47 and the collector 21 on which the insulating layer 23 has been formed is cut in the laminating direction at a position where the insulating layer 13 and the insulating layer 23 are divided. As shown in Fig. 21, the laminated combination of the multi-layer polar plate 47 and the collector 21 on which the insulating layer 23 has been formed is cut with a blade, laser light, or other devices, for example, at the positions of dashed lines C9, C10, C11, and C12 where the insulating layers 13 and the insulating layers 23 are disposed. At the positions of the dashed lines C9, C10, C11, and C12, the plurality of laminated polar plates 43a and the plurality of laminated polar plates 43b are laminated, and they are cut all at once. Fig. 22 is a schematic cross-sectional view showing an example of a laminated battery according to the present modification. Through such a cutting step, a laminated battery 102 shown in Fig. 22 is obtained. Although an insulating layer 23 is formed on a lower surface of the lowermost collector 21 of the multi-layer polar plate 47 shown in Fig. 21, a laminated battery 102 may be made by removing the insulating layer 23, or the laminated battery 102 may be used with the insulating layer 23 left.

As shown in Fig. 22, the laminated battery 102 includes a plurality of batteries 50c. The plurality of batteries 50c are the same in configuration as the battery 50 according to Embodiment 1 except that adjacent batteries 50c share at least one of a collector 11 and a collector 21 with each other.

In the laminated battery 102, the electrode layers 10 or counter-electrode layers 20 of adjacent ones of the plurality of batteries 50c share a collector 11 or 21 with each other. That is, electrode active material layers 12 are laminated on both surfaces, respectively, of the common collector 11 of adjacent batteries 50c, and counter-electrode active material layers 22 are laminated on both surfaces, respectively, of the common collector 21 of adjacent batteries 50c. Therefore, the plurality of batteries 50c are laminated such that the electrode layers 10 or counter-electrode layers 20 of adj acent ones of the plurality of batteries 50c are adjacent to each other. In this way, the laminated battery 102 serves as a parallel-laminated battery. For the purpose of taking out an electric current, the collectors 21 are electrically connected to one another, and the collectors 11 are electrically connected to one another, whereby the laminated battery 102 functions as a parallel-laminated battery.

A side surface of the laminated battery 102 is a cut surface formed by the aforementioned manufacturing method. Further, sides surfaces of the plurality of batteries 50c are flush with one another. That is, one flat surface is formed as a side surface of the laminated battery 102. On a side surface of the laminated battery 102, the layers may be exposed, or a sealing member or other members may be provided.

Thus, using the method for manufacturing a laminated battery according to the present modification makes it possible to achieve a parallel-laminated high-capacity laminated battery 102 that exhibits an effect similar to that of the battery 50 according to Embodiment 1.

### (Embodiment 3)

The following describes a laminated battery according to Embodiment 3. The following describes Embodiment 3 with a focus on differences from Embodiments 1 and 2, and omits or simplifies a description of common features.

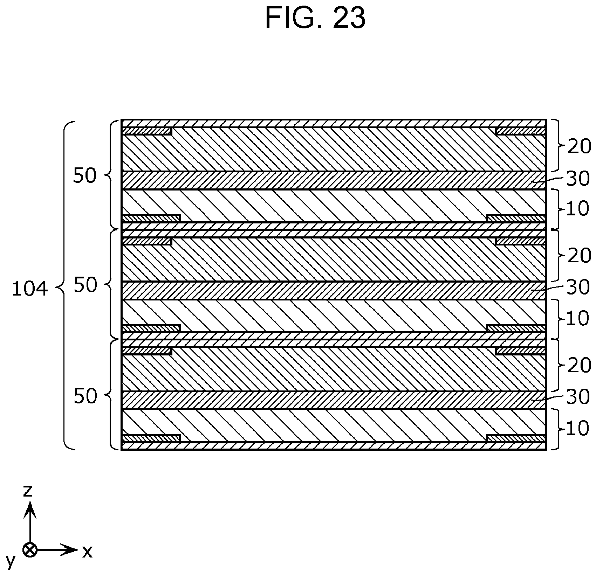

Fig. 23 is a schematic cross-sectional view showing an example of a laminated battery according to the present embodiment. As shown in Fig. 23, a laminated battery 104 includes a plurality of the batteries 50 according to Embodiment 1, and has a structure in which the plurality of batteries 50 are laminated. The plurality of batteries 50 are laminated with their upward and downward orientations uniform. The plurality of batteries 50 are laminated such that the electrode layer 10 of a first one of batteries 50 adjacent to each other in the laminating direction and the counter-electrode layer 20 of a second one of the adjacent batteries 50 are electrically connected face-to-face to each other. That is, the laminated battery 104 is a series-laminated battery. This makes it possible to achieve a high-voltage laminated battery 104 through the use of batteries 50 according to Embodiment 1.

A side surface of the laminated battery 104 is a flat surface, and in other words, the respective side surfaces of the plurality of batteries 50 are flush with one another. For the purpose of connecting leads or other wires, the plurality of batteries 50 may be laminated out of alignment in a direction perpendicular to the laminating direction.

Although, in the illustrated example, the number of batteries 50 that are laminated is 3, the number may be 2 or may be larger than or equal to 4.

The laminated battery 104 is manufactured, for example, by laminating the plurality of batteries 50 such that the electrode layer 10 of a first one of batteries 50 adjacent to each other in the laminating direction and the counter-electrode layer 20 of a second one of the adjacent batteries 50 face each other. Alternatively, the laminated battery 104 may be manufactured by, before cutting a plurality of the laminated combinations (each shown in Fig. 8) of the laminated polar plate 41 and the collector 21 on which the insulating layer 23 has been formed, laminating the plurality of laminated combinations then cutting the laminated combinations in the laminating direction at a position where the insulating layers 13 and the insulating layers 23 are divided.

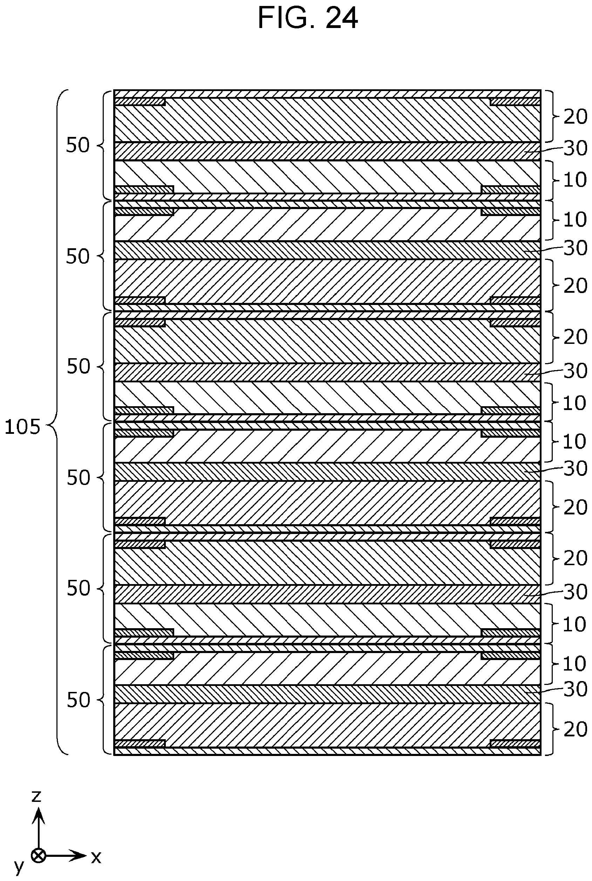

Although the laminated battery 104 is a series-laminated battery, it may be a parallel-laminated battery having a structure in which the electrode layers or counter-electrode layers of adjacent single cells face each other. A parallel-laminated battery can achieve a high-capacity laminated battery. Fig. 24 is a schematic cross-sectional view showing another example of a laminated battery according to the present embodiment. As shown in Fig. 24, a laminated battery 105 includes a plurality of the batteries 50 according to Embodiment 1, and has a structure in which the plurality of batteries 50 are laminated. The plurality of batteries 50 are laminated with their upward and downward orientations alternately reversed in the order in which they are laminated. The plurality of batteries 50 have a structure in which the plurality of batteries 50 are laminated such that the electrode layers 10 or counter-electrode layers 20 of ones of the plurality of batteries 50 adjacent to each other in the laminating direction are adjacent to each other with no solid electrolyte layer 30 sandwiched therebetween. That is, the laminated battery 105 is a parallel-laminated battery. This makes it possible to achieve a high-voltage laminated battery 105 through the use of batteries 50 according to Embodiment 1 by electrically connecting the electrode layers 10 to one another and electrically connecting he counter-electrode layers 20 to one another.

A side surface of the laminated battery 105 is a flat surface, and in other words, the respective side surfaces of the plurality of batteries 50 are flush with one another. For the purpose of connecting leads or other wires, the plurality of batteries 50 may be laminated out of alignment in a direction perpendicular to the laminating direction.

Although, in the illustrated example, the number of batteries 50 that are laminated is 6, the number may be larger than or equal to 2 and smaller than or equal to 5 or may be larger than or equal to 7.

The laminated battery 105 can be manufactured, for example, by using a method that is similar to that by which the aforementioned laminated battery 104 is manufactured and adjusting the orientation of the batteries 50 in laminating the batteries 50.

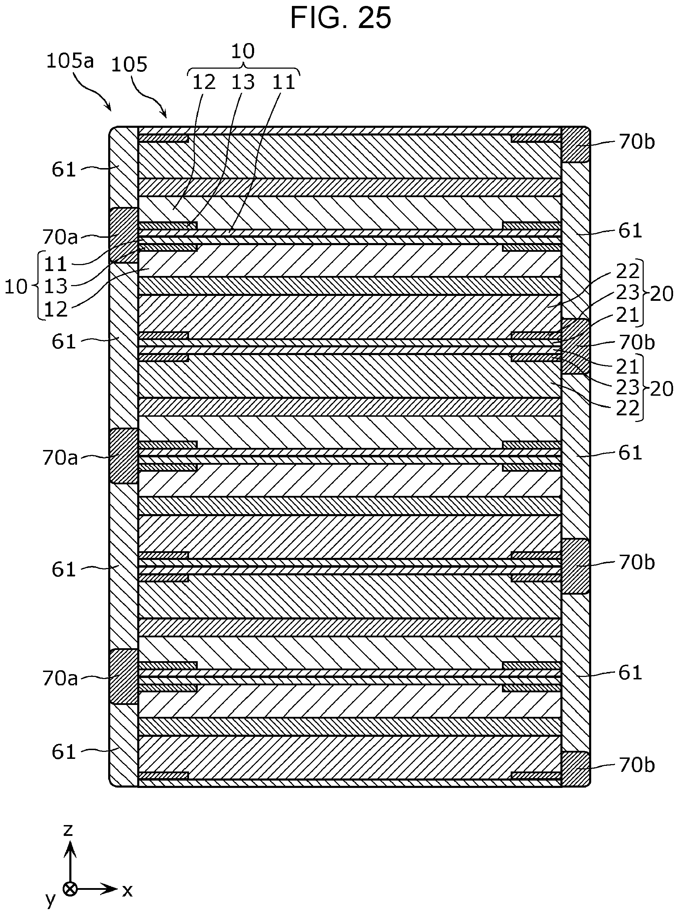

Further, a laminated battery according to the present embodiment may be provided with a sealing member, a terminal, or other members. Fig. 25 is a schematic cross-sectional view showing still another example of a laminated battery according to the present embodiment.

As shown in Fig. 25, a laminated battery 105a has a structure in which sides surfaces of a laminated battery 105 are covered with a sealing member 61, an electrode terminal 70a, and a counter-electrode terminal 70b. That is, the laminated battery 105a includes a laminated battery 105, a sealing member 61, an electrode terminal 70a, and a counter-electrode terminal 70b. Since the electrode terminal 70a and the counter-electrode terminal 70b through which to take out an electrical current are provided on the side surfaces of the laminated battery 105, there is no need to form so-called margins of the collectors 11 and the collectors 21 through which to connect to connection terminals such as leads. This makes it possible to further increase the volume energy density of the laminated battery 105a.

The electrode terminal 70a is in contact with the respective side surfaces of the collector 11 and the insulating layer 13 in the electrode layer 10 of each of the plurality of batteries 50. The electrode terminal 70a continuously covers the respective side surfaces of the collector 11 and the insulating layer 13 in the electrode layer 10 in each of the plurality of batteries 50. In the example shown in Fig. 25, the electrode terminal 70a is in contact with the respective side surfaces of the collector 11 and the insulating layer 13 in each of the two electrode layers 10 of ones of the plurality of batteries 50 that are adjacent to each other such that the electrode layers 10 are adjacent to each other. The electrode terminal 70a continuously covers the respective side surfaces of the collector 11 and the insulating layer 13 in each of the two electrode layers 10 of ones of the plurality of batteries 50 that are adjacent to each other such that the electrode layers 10 are adjacent to each other. One or more electrode terminals 70a are provided according to the number of batteries 50 that are laminated in the laminated battery 105. Further, the electrode terminal 70a is not in contact with the counter-electrode layer 20 of any of the plurality of batteries 50.

The counter-electrode terminal 70b is in contact with the respective side surfaces of the collector 21 and the insulating layer 23 in the counter-electrode layer 20 of each of the plurality of batteries 50. The counter-electrode terminal 70b continuously covers the respective side surfaces of the collector 21 and the insulating layer 23 in the counter-electrode layer 20 in each of the plurality of batteries 50. In the example shown in Fig. 25, the counter-electrode terminal 70b is in contact with the respective side surfaces of the collector 21 and the insulating layer 23 in each of the two counter-electrode layers 20 of ones of the plurality of batteries 50 that are adjacent to each other such that the counter-electrode layers 20 are adjacent to each other. The counter-electrode terminal 70b continuously covers the respective side surfaces of the collector 21 and the insulating layer 23 in each of the two counter-electrode layers 20 of ones of the plurality of batteries 50 that are adjacent to each other such that the counter-electrode layers 20 are adjacent to each other. One or more counter-electrode terminals 70b are provided according to the number of batteries 50 that are laminated in the laminated battery 105. Further, the counter-electrode terminal 70b is not in contact with the electrode layer 10 of any of the plurality of batteries 50.

Usable examples of materials of the electrode terminal 70a and the counter-electrode terminal 70b include conductive resin obtained by dispersing metal particles in resin. The electrode terminal 70a and the counter-electrode terminal 70b are formed, for example, by applying the conductive resin to the side surfaces of the laminated battery 105. The plurality of batteries 50 constituting the laminated battery 105 include insulating layers 13 and insulating layers 23. The collectors 11 and the collectors 21, which are constituted by metal foil or other materials, are high in surface energy and tend to repel the material of the electrode terminal 70a and the counter-electrode terminal 70b. Since the insulating layers 13 and the insulating layers 23 contain resin or other materials, the material of the electrode terminal 70a and the counter-electrode terminal 70b is higher in wettability than the collector s 11 and the collectors 21. Further, it is hard for the material of the electrode terminal 70a and the counter-electrode terminal 70b to soak into the insulating layers 13 and the insulating layers 23 than into the electrode active material layers 12 and the counter-electrode active material layers 22, which are formed from a mixture of active materials. This makes it easy to form an electrode terminal 70a and a counter-electrode terminal 70b in regions including side surfaces of insulating layer 13 and the insulating layer 23, although it is hard to form an electrode terminal 70a and a counter-electrode terminal 70b on side surfaces of a laminated battery constituted solely by a collector 11, a collector 21, an electrode active material 12, and a counter-electrode active material layer 22. Further, reducing the thicknesses of the collectors 11 and the collectors 21 to increase the volume energy density of the laminated battery 105a makes it hard to recognize the locations of the side surfaces of the collectors 11 and the collectors 21. However, the presence of the insulating layers 13 laminated on the collectors 11 and the insulating layers 23 laminated on the collectors 21 makes it easy to recognize the locations of the side surfaces of the collectors 11 and the collectors 21. This makes it possible to reduce the occurrence of a short circuit or other failures due to formation of the electrode terminal 70a, the counter-electrode terminal 70b, and the sealing member 61 with misalignments. For all these reasons, in a case where the electrode terminal 70a and the counter-electrode terminal 70b are formed on the laminated battery 105, the occurrence of defective formation of the electrode terminal 70a and the counter-electrode terminal 70b can be reduced, so that a highly-reliable laminated battery 105a can be formed.

Alternatively, the electrode terminal 70a and the counter-electrode terminal 70b may be constituted by an electrical conducting material other than the conductive resin. Examples of the electrical conducting material include metals such as solder, copper, and aluminum.

The sealing member 61 covers portions of the side surfaces of the laminated battery 105 not covered with the electrode terminal 70a or the counter-electrode terminal 70b. The sealing member 61 is in contact, for example, with the side surfaces of the laminated battery 105. Surfaces of the electrode terminal 70a and the counter-electrode terminal 70b that face away from the laminated battery 105 are not covered with the sealing member 61 but exposed. For example, all side surfaces of the laminated battery 105 are covered with any of the sealing member 61, the electrode terminal 70a, and the counter-electrode terminal 70b. This prevents the side surfaces of the layers of the laminated battery 105a from being exposed directly to the outside, thus bringing about increase in strength of the laminated battery 105a and improvement in reliability of the laminated battery 105a. Further, the laminated battery 105a can be not only used in a metal case or an aluminum laminate film but also used, for example, as an electronic component that is mounted on a substrate.

The sealing member 61 may be made, for example, from a material that is similar to that from which the aforementioned sealing member 60 is made. As is the case with the sealing member 60, the sealing member 61 may be constituted by a plurality of layers.

It should be noted that the sealing member 61 may not cover all side surfaces not covered with the electrode terminal 70a or the counter-electrode terminal 70b. For example, the sealing member 61 may cover side surfaces of the electrode layers 10 and the counter-electrode layers 20 not covered with the electrode terminal 70a or the counter-electrode terminal 70b, and the side surfaces of the solid electrolyte layers 30 may be exposed. This causes the side surfaces of the electrode layers 10 and the counter-electrode layers 20 to be covered with the sealing member 61, so that short circuits are reduced. Even in such a case where the sealing member 61 is selectively formed on the side surfaces of the electrode layers 10 and the counter-electrode layers 20, the occurrence of defective formation of the sealing member 61 can be reduced for the same reason as the electrode terminal 70a and the counter-electrode terminal 70b, so that a highly-reliable laminated battery 105a can be formed. Further, the laminated battery 105a may not include the sealing member 61.

Further, in the laminated battery 105a, leads or other wires may be connected to the electrode terminal 70a and the counter-electrode terminal 70b, and furthermore, the leads, the electrode terminal 70a, and the counter-electrode terminal 70b may be covered with the sealing member 61.

Further, as for the laminated battery 102 according to Embodiment 2 too, an effect similar to that of the laminated battery 105a is brought about by such a sealing member 61, such an electrode terminal 70a, and such a counter-electrode terminal 70b being provided on the side surfaces.

Thus, laminating the batteries 50, which are single cells, makes it possible to achieve a high-capacity or high-voltage laminated battery that can exhibit an effect similar to that of the batteries 50.

Although, a plurality of batteries 50 are laminated in the laminated battery 104 and the laminated battery 105, a laminated battery according to the present embodiment is not limited to such a configuration. A laminated battery according to the present embodiment may be a series-laminated or parallel-laminated battery in which a plurality of batteries such as batteries 51, 52, or 53 other than batteries 50 are laminated.

### (Other Embodiments)

In the foregoing, a battery according to the present disclosure, a laminated battery according to the present disclosure, and a method for manufacturing the same have been described with reference to embodiments; however, the present disclosure is not intended to be limited to these embodiments. Applications to the present embodiments of various types of modification conceived of by persons skilled in the art and other embodiments constructed by combining some constituent elements of the embodiments are encompassed in the scope of the present disclosure, provided such applications and embodiments do not depart from the spirit of the present disclosure.

Although, in each of the foregoing embodiments, the battery is constituted by a collector, an insulating layer, an electrode active material layer, a solid electrolyte layer, and a counter-electrode active material layer, this is not intended to impose any limitation. For example, a bonding layer or other layers for reducing electric resistance and improving bonding strength may be provided between each of the layers of the battery and another.

Further, for example, in each of the foregoing embodiments, the battery may not include a collector on the counter-electrode active material layer in a case where the battery is surrounded by a chassis or substrate and a portion of the chassis or substrate functions as a collector. In other words, the counter-electrode layer may be constituted by the counter-electrode active material layer.

Further, although, in each of the foregoing embodiments, the collector, the electrode active material layer, the solid electrolyte layer, and the counter-electrode active material layer have the same shape and position in plan view, this is not intended to impose any limitation. At least one of the collector, the electrode active material layer, the solid electrolyte layer, and the counter-electrode active material layer may be different in shape or position in plan view.

Further, although, in each of the foregoing embodiments, a power-generating element is formed by sequentially laminating the electrode active material layer, the solid electrolyte layer, and the counter-electrode active material layer over the collector in the power-generating element laminating step, this is not intended to impose any limitation. For example, in the power-generating element laminating step, a power-generating element may be formed by sequentially laminating the electrode active material layer, the solid electrolyte layer, and the counter-electrode active material layer on top of a sheet-like substrate, and the power-generating element thus formed may be removed from the substrate and laminated on the collector.

Further, the foregoing embodiments are subject, for example, to various changes, substitutions, additions, and omissions in the scope of the claims or the scope of equivalents thereof.

### Industrial Applicability

A battery according to the present disclosure may be used as a secondary battery such as an all-solid-state battery for use, for example, in various types of electronics, automobiles, or other devices.

### Reference Signs List

10, 10a, 10b electrode layer
11, 11a, 21, 21a collector
12, 12a electrode active material layer
12s, 22s principal surface
13, 13a, 13b, 23, 23a, 23b, 23c insulating layer
20, 20a, 20b, 20c counter-electrode layer
22, 22a counter-electrode active material layer
30, 30a solid electrolyte layer
40 power-generating element
41, 41a, 41b, 42, 43a, 43b laminated polar plate
45, 47 multi-layer polar plate
50, 50a, 50c, 51, 52, 53 battery
100, 100a, 102, 104, 105, 105a laminated battery
51s side surface
60, 61 sealing member
70a electrode terminal
70b counter-electrode terminal

## Claims

1. A battery comprising:
an electrode layer;
a counter-electrode layer placed opposite to the electrode layer; and
a solid electrolyte layer located between the electrode layer and the counter-electrode layer,
wherein
the electrode layer includes:
an electrode collector;
an electrode active material layer located between the electrode collector and the solid electrolyte layer; and
an electrode-side insulating layer located between the electrode collector and the electrode active material layer at ends of the electrode layer,
the counter-electrode layer includes:
a counter-electrode collector;
a counter-electrode active material layer located between the counter-electrode collector and the solid electrolyte layer; and
a counter-electrode-side insulating layer located between the counter-electrode collector and the counter-electrode active material layer at ends of the counter-electrode layer, and
in a plan view, a length of the electrode-side insulating layer in a direction from an outer periphery toward a central part of the battery is greater than a length of the counter-electrode-side insulating layer in the direction from the outer periphery toward the central part of the battery.

2. The battery according to claim 1, wherein
a side surface of the electrode-side insulating layer and a side surface of the electrode collector are flush with each other, and
a side surface of the counter-electrode-side insulating layer and a side surface of the counter-electrode collector are flush with each other.

3. The battery according to claim 1 or 2, wherein
a thickness of the electrode-side insulating layer is greater than or equal to half of a thickness of the electrode collector, and
a thickness of the counter-electrode-side insulating layer is greater than or equal to half of a thickness of the counter-electrode collector.

4. The battery according to any one of claims 1 to 3, wherein
the electrode layer is a positive-electrode layer, and
the counter-electrode layer is a negative-electrode layer.

5. The battery according to any one of claims 1 to 4, wherein at least one of the electrode-side insulating layer or the counter-electrode-side insulating layer contains resin.

6. The battery according to any one of claims 1 to 5, wherein at least one of the electrode-side insulating layer or the counter-electrode-side insulating layer contains a metal oxide.

7. The battery according to any one of claims 1 to 6, wherein the electrode-side insulating layer and the counter-electrode-side insulating layer are made of the same material.

8. The battery according to any one of claims 1 to 7, wherein the length of each of the electrode-side insulating layer and the counter-electrode-side insulating layer in the direction from the outer periphery toward the central part of the battery in plan view is smaller than or equal to 1 mm.

9. The battery according to any one of claims 1 to 8, wherein a thickness of at least one of the electrode-side insulating layer or the counter-electrode-side insulating layer is greater than or equal to 5 µm.

10. The battery according to any one of claims 1 to 9, wherein respective side surfaces of the solid electrolyte layer, the electrode collector, the electrode active material layer, the electrode-side insulating layer, the counter-electrode collector, the counter-electrode active material layer, and the counter-electrode-side insulating layer are exposed.

11. The battery according to any one of claims 1 to 10, wherein a side surface of the electrode layer, a side surface of the counter-electrode layer, and a side surface of the solid electrolyte layer are flush with one another.

12. The battery according to any one of claims 1 to 11, wherein the electrode active material layer and the counter-electrode active material layer have the same shape and position in plan view.

13. The battery according to any one of claims 1 to 12, wherein a side surface of the battery is inclined in such a direction with respect to a laminating direction that an area of the counter-electrode layer is larger than an area of the electrode layer in plan view.

14. The battery according to any one of claims 1 to 13, wherein a side surface of the battery is a cut surface.

15. The battery according to claim 14, wherein a shape of the cut surface is a rectangle or a trapezoid.

16. The battery according to any one of claims 1 to 15, wherein
the electrode-side insulating layer is in a shape of a frame provided on an outer periphery of the electrode layer in plan view, and
the counter-electrode-side insulating layer is in a shape of a frame provided on an outer periphery of the counter-electrode layer in plan view.

17. The battery according to any one of claims 1 to 15, wherein
a planimetric shape of the battery is a rectangle, and
the electrode-side insulating layer and the counter-electrode-side insulating layer are each disposed along two opposite sides of the rectangle.

18. The battery according to any one of claims 1 to 17, wherein the solid electrolyte layer contains a solid electrolyte having lithium-ion conductivity.

19. A laminated battery comprising a plurality of the batteries according to any one of claims 1 to 18,
wherein the plurality of batteries are laminated.

20. The laminated battery according to claim 19, wherein
the plurality of batteries are laminated such that the electrode layers or the counter-electrode layers of adj acent ones of the plurality of batteries are adjacent to each other, and
the laminated battery includes
an electrode terminal that is in contact with respective side surfaces of the electrode collectors and the electrode-side insulating layers in the electrode layers, and
a counter-electrode terminal that is in contact with respective side surfaces of the counter-electrode collectors and the counter-electrode-side insulating layers in the counter-electrode layers.

21. A method for manufacturing a battery, the method comprising:
an insulating layer laminating step of laminating a first insulating layer on a portion of at least one surface of a first collector;
a power-generating element laminating step of laminating a power-generating element obtained by laminating an electrode active material layer, a solid electrolyte layer, and a counter-electrode active material layer in this order and a laminated combination of the first collector and the first insulating layer such that the electrode active material layer covers the first insulating layer;
a collector laminating step of laminating a second insulating layer and a second collector on a side of the power-generating element that faces away from the first collector, the second insulating layer and the second collector being laminated on the power-generating element such that the second insulating layer is sandwiched between the counter-electrode active material layer of the power-generating element and the second collector and the first insulating layer and the second insulating layer are positioned to overlap each other in plan view; and
a cutting step of cutting a laminated combination of the first collector and the first insulating layer, the power-generating element, the second insulating layer, and the second collector at a position where the first insulating layer and the second insulating layer are divided.
